# FASCICULE DE BREVET EUROPEEN

(11) **EP 2 655 831 B1**
(45) Date de publication et mention de la délivrance du brevet: **15.02.2017**
(21) Numéro de dépôt: 11815504.3
(22) Date de dépôt: 21.12.2011
(51) Int. Cl.: F02B 75/04, F16K 31/06

(54) **VANNE TUBULAIRE DE COMMANDE D'UN MOTEUR À RAPPORT VOLUMÉTRIQUE VARIABLE**
ROHRFÖRMIGES VENTIL ZUR STEUERUNG EINES MOTORS MIT VARIABLEM VERDICHTUNGSVERHÄLTNIS
TUBULAR VALVE FOR CONTROLLING AN ENGINE WITH A VARIABLE COMPRESSION RATIO

(30) Priorité: 23.12.2010 FR 1005058
(43) Date de publication de la demande: 30.10.2013
(73) Titulaire: Rabhi, Vianney, 69006 Lyon (FR); MCE-5 Development, 69003 Lyon (FR)
(72) Inventeur: RABHI, Vianney, 69006 Lyon (FR)
(74) Mandataire: Jeannet, Olivier
(86) Numéro de dépôt international: PCT/FR2011/053132
(87) Numéro de publication internationale: WO 2012/085463

(56) Documents cités:
- FR-A- 1 257 145
- FR-A- 1 348 291
- FR-A1- 2 933 140
- GB-A- 815 622
- GB-A- 2 190 461
- US-A- 5 005 803
- US-A- 5 516 076

## Description

La présente invention est relative à une vanne tubulaire permettant de piloter le taux de compression d'un moteur à rapport volumétrique variable.

On connait d'après le brevet français FR 1 348 291 une soupape d'arrêt comportant un tube maintenue par un ressort en position de fermeture et un électroaimant permettant de déplacer ledit tube dans une position d'ouverture pour le passage d'un fluide.

On connaît, d'après les brevets internationaux WO 98/51911, WO 00/31377 et WO 03/008783 appartenant au demandeur, différents dispositifs mécaniques pour moteur à cylindrée variable.

On remarque que le brevet international WO 98/51911 au nom du demandeur décrit un dispositif servant à améliorer le rendement des moteurs à combustion interne à pistons utilisés à charge et régime variables par adaptation en marche de leur cylindrée effective et/ou de leur rapport volumétrique. Ce type de moteur étant connu de l'homme de l'art sous la dénomination de « moteur à taux de compression variable », cette dénomination sera retenue dans le texte qui suit.

On constate que selon le brevet international WO 00/31377 au nom du demandeur, le dispositif de transmission mécanique pour moteur à taux de compression variable comprend un piston de combustion, solidaire dans sa partie inférieure d'un organe de transmission, coopérant d'une part avec un dispositif de guidage à roulement, et d'autre part avec une roue dentée solidaire d'une bielle permettant de réaliser la transmission du mouvement entre ledit piston et ladite bielle.

On note que selon le brevet international WO 03/008783 au nom du demandeur le dispositif de transmission mécanique pour moteur à taux de compression variable comprend au moins un cylindre dans lequel se déplace un piston de combustion qui est solidaire, dans sa partie inférieure, d'un organe de transmission dit aussi « crémaillère de piston » coopérant d'une part au moyen d'une crémaillère de faible dimension avec un dispositif de guidage à roulement, et d'autre part au moyen d'une autre crémaillère de forte dimension avec une roue dentée solidaire d'une bielle. Ledit dispositif de transmission mécanique pour moteur à taux de compression variable comprend également au moins une crémaillère de commande coopérant avec la roue dentée, des moyens de fixation du piston de combustion sur l'organe de transmission qui offrent une précontrainte de serrage, des moyens de liaison qui permettent de rigidifier les dents des crémaillères, et des moyens de renforcement et d'allègement de la structure de la roue dentée.

On note que le jeu minimal de fonctionnement entre les dentures des crémaillères de forte dimension et celles de la roue dentée est fixé par la localisation de surfaces de roulement réalisées sur lesdites crémaillères de forte dimension et sur ladite roue dentée.

On remarque que selon la demande de brevet FR 2 896 544 le moteur à taux de compression variable comprend une culasse commune qui coopère avec un carter cylindres pour fermer, d'une part l'extrémité d'au moins un cylindre du moteur au niveau de sa chambre de combustion et d'autre part, l'extrémité d'au moins un cylindre d'un vérin de commande dudit moteur au niveau de la chambre supérieure dudit vérin, ledit carter cylindres contenant l'ensemble des composants de l'attelage mobile du moteur à rapport volumétrique variable.

On note que selon la demande de brevet FR 2 896 539 le moteur à taux de compression variable possède au moins un vérin presseur qui permet aux surfaces de roulement de rester en permanence en contact entre elles afin de maîtriser les émissions acoustiques dudit moteur et d'augmenter les tolérances de fabrication de son carter cylindre, ledit moteur à taux de compression variable possédant autant de vérins presseurs et de vérins de commande qu'il possède de cylindres.

On note également que selon les brevets WO 98/51911 et FR 2 896 539, la position verticale de la crémaillère de commande du moteur à taux de compression variable est contrôlée par un vérin de commande qui comporte une entrée de fluide hydraulique sous pression prévue pour compenser d'éventuelles fuites dudit vérin de commande, et pour assurer une pression de pré charge visant à augmenter la précision de maintien de la consigne en position verticale dudit vérin de commande en réduisant les effets de la compressibilité de l'huile, et visant à éviter tout phénomène de cavitation à l'intérieur des chambres dudit vérin.

On remarque dans le brevet WO 98/51911 que le vérin de commande comporte une chambre inférieure et une chambre supérieure dont la cylindrée est maintenue identique à celle de ladite chambre inférieure grâce à un prolongateur d'axe de vérin également appelée tige supérieure de vérin. Toujours selon le brevet WO 98/51911 le vérin de commande comprend également un piston de vérin, des valves maintenues en place par des ressorts, et une tige de contrôle, l'extrémité supérieure dudit vérin étant fermée par une culasse qui comporte des moyens d'étanchéité entre ladite culasse et ladite tige supérieure de vérin d'une part et entre ladite culasse et ladite tige de contrôle d'autre part.

Comme revendiqué dans les demandes de brevet français FR 2 896 539 et FR 07/05237 au nom du demandeur, le moteur à taux de compression variable comporte une centrale hydraulique prévue d'une part, pour fournir à son ou ses vérin(s) presseur(s) la pression hydraulique nécessaire à leur fonctionnement, et d'autre part, pour fournir à son ou ses vérin(s) de commande la pression hydraulique nécessaire à la compensation de leurs éventuelles fuites hydrauliques et à l'augmentation de leur précision. On note que ladite centrale est alimentée en huile par le circuit de lubrification du moteur via une pompe haute pression pouvant être entraînée par l'un quelconque des arbres à cames du moteur à taux de compression variable, ladite centrale alimentant ensuite le ou les vérin(s) de commande et le ou les vérin(s) presseur(s) dudit moteur.

On remarque, selon la demande de brevet français FR 2 896 539 ou WO 2007/085739 au nom du demandeur, que la pression hydraulique fournie au vérin de commande peut également servir à augmenter la vitesse de déplacement dudit vérin de commande lors des manoeuvres visant à augmenter le rapport volumétrique du moteur à taux de compression variable. Selon cette dernière variante, ladite pression hydraulique est appliquée sur la face supérieure de la tige supérieure du vérin de commande au moyen d'une chambre aménagée dans la culasse dudit vérin.

On constate que dans les demandes de brevets et brevets d'invention au nom du demandeur, la tige de commande peut avantageusement être remplacée par des électrovannes qui coopèrent avec au moins un capteur, de manière à simplifier la réalisation du système de commande du taux de compression du moteur à taux de compression variable.

Cependant, au vu de la difficulté que représente la réalisation d'électrovannes à la fois fiables, économiques et compatibles avec les impuretés et particules contenues dans l'huile de lubrification du moteur à taux de compression variable, il a été proposé dans la demande de brevet français FR 08/03589 au nom du demandeur de remplacer lesdites électrovannes par un dispositif de réglage du taux de compression à levée de billes qui comprend au moins deux billes ou clapets reposant chacune sur un siège et obturant respectivement l'une et l'autre extrémité d'un canal de transfert reliant la chambre inférieure et la chambre supérieure du vérin de commande du moteur à taux de compression variable, lesdites billes agissant comme un clapet anti-retour lorsqu'elles sont maintenues sur leur siège par un ressort afin de ne laisser passer le fluide hydraulique que dans un sens.

On voit dans cette dernière demande de brevet que lesdites billes peuvent être levées de leur siège par des moyens de levage pour laisser passer ledit fluide hydraulique dans les deux sens, lesdits moyens de levage levant lesdites billes par l'intermédiaire d'un poussoir cylindrique. Selon cette demande de brevet, les moyens de levage peuvent être constitués d'actionneurs électromécaniques réalisables selon diverses variantes, deux d'entre elles prévoyant deux hauteurs de levée desdites billes de leur siège, tandis qu'une autre en prévoit une levée incrémentale. Dans ladite demande de brevet, il est également revendiqué deux variantes utilisant des composants piézo-électriques, ainsi qu'une variante étagée qui comporte un piston permettant de manoeuvrer en translation longitudinale le poussoir cylindrique, ledit piston pouvant utiliser la pression régnant dans la centrale hydraulique du moteur à taux de compression variable au moyen d'une électrovanne pour lever la bille de son siège.

On constate que le brevet français FR 2 933 140 au nom du demandeur a fait l'objet d'une variante au travers du brevet français FR 2 933 141, toujours au nom du demandeur. Dans ce dernier brevet, les moyens de levage de billes sont avantageusement constitués d'un dispositif à vis comportant un moteur électrique rotatif qui entraîne ladite vis en rotation par l'intermédiaire de moyens de transmission mécanique.

Ce dispositif permet toujours de lever ou de déposer la bille de son siège, mais en contrôlant la hauteur de levée de ladite bille en continu avec une grande précision. Contrairement à certaines variantes revendiquées dans le brevet français FR_2 933 140 au nom du demandeur, le dispositif à vis ne présente aucun risque d'usure qui soit de nature à affecter la précision ou la répétabilité de la hauteur de levée de ladite bille.

La vanne tubulaire permettant de piloter le taux de compression d'un moteur à rapport volumétrique variable est conçue pour résoudre un ensemble de problèmes liés aux dispositifs de réglage du taux de compression à levée de bille tels que décrit dans les demandes de brevet français FR 2 933 140 et FR 2 933 141 au nom du demandeur auxquelles il vient d'être fait référence, parmi lesquels :
- L'effort à produire est important pour lever la bille de son siège quand la pression qui règne dans la chambre correspondante du vérin de commande est élevée. Lorsqu'une ventouse électromagnétique est choisie comme moyen de levage de la bille, cet effort nécessite d'équiper ladite ventouse d'une bobine de forte dimension. Encombrante, cette bobine devient difficile à intégrer au moteur à taux de compression variable tandis que son poids et son prix de revient deviennent trop élevés ;
- L'effort à fournir pour maintenir la bille levée est important lorsqu'un fort débit d'huile s'établit au passage entre ladite bille et son siège. Lorsqu'une ventouse électromagnétique est utilisée comme moyen de levage de ladite bille, ledit effort compromet la possibilité de lever partiellement ladite bille de son siège en faisant varier la puissance de ladite ventouse en modulant la largeur d'impulsion du courant électrique qui en alimente la bobine. En effet, en ce cas, les puissances électriques nécessaires augmenteraient exagérément la température de ladite bobine de sorte que sa durée de vie ne serait plus compatible avec celle du moteur à taux de compression variable ;
- Le dispositif à vis est cher et complexe et sa fiabilité est difficile à assurer. En outre, ce dispositif ne permet pas de lever simultanément les deux billes qui communiquent chacune avec une chambre du vérin de commande du moteur à taux de compression variable, or, lever simultanément lesdites billes permettrait de décomprimer le vérin de commande lorsque celui-ci tend à s'auto comprimer, ce qui est potentiellement nécessaire en fonction de l'utilisation faite du moteur à taux de compression variable.

C'est pour résoudre différents problèmes liés aux dispositifs de réglage du taux de compression à levée de bille pour moteur à taux de compression variable tels que décrits dans les brevets français FR 2 933 140 et FR 2 933 141 cités en référence tout en en conservant les principaux avantages, que la vanne tubulaire permettant de piloter le taux de compression d'un moteur à rapport volumétrique variable propose :
- De réduire drastiquement l'effort devant être produit par les moyens de levage électriques pour permettre le passage de l'huile entre la chambre supérieure et la chambre inférieure du vérin de commande du moteur à taux de compression variable, de sorte que lesdits moyens de levage puissent être constitués d'une ventouse électromagnétique ou d'un solénoïde à simple bobine de faible encombrement plutôt que d'un dispositif à vis complexe et coûteux ;
- De réduire drastiquement l'effort devant être produit par les moyens de levage électriques pour maintenir entière ou partielle la section de passage de l'huile entre la chambre supérieure et la chambre inférieure du vérin de commande, la section partielle s'obtenant par exemple en réglant la puissance de la bobine qu'intègre lesdits moyens de levage, ladite puissance pouvant être réglée en modulant la largeur d'impulsion du courant électrique qui alimente ladite bobine ;
- De limiter considérablement l'effet des fortes variations de la pression régnant dans les chambres du vérin de commande sur la stabilité de l'effort à fournir par les moyens de levage pour maintenir entière ou partielle la section de passage de l'huile entre la chambre supérieure et la chambre inférieure du vérin de commande ;
- De permettre de rapides variations du taux de compression du moteur à taux de compression variable sur une plage angulaire limitée, en autorisant le déplacement du piston du vérin de commande sur certaines plages de position angulaire du vilebrequin, tout en interdisant le déplacement dudit piston sur d'autres plages angulaires dudit vilebrequin, cette stratégie étant potentiellement utile pour contrôler finement l'allumage par compression aussi connu sous les acronymes « CAI » ou « HCCI ».
- De réunir en un seul et même dispositif compact, d'une part, la fonction d'ouverture et d'obturation de l'une des extrémités du canal de transfert qui relie la chambre supérieure et la chambre supérieure du vérin de commande du moteur à taux de compression variable, et d'autre part, la fonction de clapet anti-retour permettant de ne laisser passer le fluide hydraulique que dans un seul sens lorsque ledit dispositif obture l'une des extrémités dudit canal.

La vanne tubulaire de réglage du taux de compression d'un moteur à taux de compression variable suivant la présente invention comprend :
- Au moins un tube rectiligne pouvant se déplacer en translation longitudinale dans un carter de vanne comportant une chambre basse pression mise en relation avec un accumulateur de pression par au moins un conduit, et une chambre haute pression mise en relation avec l'une ou l'autre des chambres supérieures ou inférieures du vérin de commande par au moins un conduit, ledit tube rectiligne comportant une première extrémité débouchant dans ladite chambre basse pression et une deuxième extrémité débouchant dans ladite chambre haute pression, ladite deuxième extrémité pouvant entrer en contact avec au moins une surface d'obturation solidaire dudit carter de vanne de sorte à boucher de façon la plus étanche possible ladite deuxième extrémité, ledit tube rectiligne étant maintenu en contact avec la surface d'obturation par au moins un ressort anti retour et d'obturation;
- Des moyens d'étanchéité entre la surface externe dudit tube rectiligne et le carter de vanne isolant la chambre haute pression de la chambre basse pression, lesdits moyens d'étanchéité étant constitués d'un tube anti retour à l'intérieur duquel est logé le tube rectiligne, le tube rectiligne pouvant se déplacer longitudinalement dans le tube anti retour, tandis que ledit tube anti retour peut se déplacer longitudinalement par rapport au carter de vanne, ledit tube rectiligne réalisant avec ledit tube anti retour une étanchéité, ledit tube anti retour comportant une extrémité qui est la plus éloignée de la surface d'obturation du tube rectiligne qui est maintenue en contact par le ressort anti retour et d'obturation avec un siège anti retour aménagé dans le carter de vanne de sorte à interdire la passage du fluide hydraulique depuis la chambre haute pression vers la chambre basse pression, mais à autoriser le passage dudit fluide depuis la chambre basse pression vers la chambre haute pression;
- Au moins un actionneur électrique capable d'appliquer au tube rectiligne un effort antagoniste à celui produit par le ressort anti retour et d'obturation, ledit effort étant suffisant pour décoller le tube rectiligne de la surface d'obturation lorsque ledit actionneur est traversé par un courant électrique.

La vanne tubulaire de réglage du taux de compression d'un moteur à taux de compression variable suivant la présente invention comprend un tube rectiligne dont la deuxième extrémité est troncosphérique et présente une ligne de contact avec la surface d'obturation similaire à celle réalisée par une bille portant sur un siège.

La vanne tubulaire de réglage du taux de compression d'un moteur à taux de compression variable suivant la présente invention comprend un tube rectiligne qui est relié à l'actionneur électrique par une tige de traction dont la fixation sur ledit tube n'obture pas totalement ledit tube et laisse un passage axial et/ou radial permettant au fluide hydraulique de circuler à l'intérieur dudit tube.

La vanne tubulaire de réglage du taux de compression d'un moteur à taux de compression variable suivant la présente invention comprend une tige de traction dont l'extrémité se termine par une tête de traction de diamètre supérieur à un trou aménagé dans une surface qui bouche la première extrémité du tube rectiligne, ladite tige traversant ledit trou et ladite tête étant logée dans ledit tube, ce dernier comportant au moins un orifice radial et/ou axial débouchant dans la chambre basse pression.

La vanne tubulaire de réglage du taux de compression d'un moteur à taux de compression variable suivant la présente invention comprend une tige de traction dont l'extrémité se termine par une tête d'articulation plate percée d'un trou que traverse un axe, les deux extrémités dudit axe étant logées dans des trous aménagés radialement dans le tube rectiligne, au voisinage de la première extrémité dudit tube.

La vanne tubulaire de réglage du taux de compression d'un moteur à taux de compression variable suivant la présente invention comprend un actionneur électrique qui est logé dans la chambre basse pression.

La vanne tubulaire de réglage du taux de compression d'un moteur à taux de compression variable suivant la présente invention comprend un actionneur électrique qui est logé à l'extérieur du carter de vanne tandis que la tige de traction qui le relie au tube rectiligne traverse le carter de vanne tout en constituant avec ce dernier une étanchéité.

La vanne tubulaire de réglage du taux de compression d'un moteur à taux de compression variable suivant la présente invention comprend une section du tube rectiligne au niveau de l'étanchéité que ledit tube constitue avec le tube anti retour qui est plus petite que la section dudit tube rectiligne au niveau de son contact avec la surface d'obturation.

La vanne tubulaire de réglage du taux de compression d'un moteur à taux de compression variable suivant la présente invention comprend une extrémité du tube anti retour qui est maintenue en contact avec le siège anti retour et qui est troncosphérique et présente une ligne de contact avec ledit siège anti retour similaire à celle réalisée par une bille portant sur un siège.

La vanne tubulaire de réglage du taux de compression d'un moteur à taux de compression variable suivant la présente invention comprend un ressort anti retour et d'obturation qui prend appui d'un coté, sur le tube rectiligne au voisinage de sa deuxième extrémité, et de l'autre coté, sur le tube anti retour au voisinage de son extrémité maintenue en contact avec le siège anti retour.

La vanne tubulaire de réglage du taux de compression d'un moteur à taux de compression variable suivant la présente invention comprend une butée est aménagée sur le tube anti retour et/ou sur le tube rectiligne, ladite butée limitant la distance maximale entre le tube anti retour et le siège anti retour d'une part, et limitant dans les mêmes proportions la distance maximale entre le tube rectiligne et la surface d'obturation d'autre part.

La vanne tubulaire de réglage du taux de compression d'un moteur à taux de compression variable suivant la présente invention comporte des moyens d'étanchéité entre la tige de traction et le carter de vanne qui sont constitués d'au moins un joint annulaire et/ou au moins un segment.

La vanne tubulaire de réglage du taux de compression d'un moteur à taux de compression variable suivant la présente invention comporte des moyens d'étanchéité entre le tube rectiligne et le tube anti retour qui sont constitués d'au moins un joint annulaire et/ou au moins un segment.

La vanne tubulaire de réglage du taux de compression d'un moteur à taux de compression variable suivant la présente invention comprend un actionneur électrique qui est constitué d'une bobine de fil conducteur qui attire un noyau ou une palette magnétique lorsque ladite bobine est traversée par un courant électrique.

La vanne tubulaire de réglage du taux de compression d'un moteur à taux de compression variable suivant la présente invention comprend un noyau qui est directement fixé sur le tube rectiligne.

La vanne tubulaire de réglage du taux de compression d'un moteur à taux de compression variable suivant la présente invention comprend un actionneur électrique qui est constitué d'un moteur électrique rotatif qui peut faire tourner dans un sens ou dans l'autre une vis libre en rotation par rapport au carter de vanne mais fixe en translation par rapport audit carter, ladite vis étant vissée directement ou indirectement dans le tube rectiligne et ledit tube se déplaçant en translation par rapport audit carter lorsque ladite vis tourne sous l'action du moteur électrique rotatif.

La vanne tubulaire de réglage du taux de compression d'un moteur à taux de compression variable suivant la présente invention comprend un carter de vanne qui est constitué d'au moins une pièce de révolution comportant des conduits d'entrée-sortie fixés sur une platine de distribution, ladite platine étant elle-même fixée sur le carter cylindre du moteur à taux de compression variable et ladite platine servant de support à une ou plusieurs vannes tubulaires et comportant des conduits mettant en relation lesdites vannes avec les chambres supérieures et inférieures du vérin de commande hydraulique à double effet d'une part, et avec l'accumulateur de pression d'autre part.

La vanne tubulaire de réglage du taux de compression d'un moteur à taux de compression variable suivant la présente invention comprend une platine de distribution qui sert de carter de vanne à au moins une vanne tubulaire.

La vanne tubulaire de réglage du taux de compression d'un moteur à taux de compression variable suivant la présente invention comprend un actionneur électrique qui est muni d'au moins une butée de vanne réglable ou non limitant la course maximale de translation linéaire du tube rectiligne.

La vanne tubulaire de réglage du taux de compression d'un moteur à taux de compression variable suivant la présente invention comprend un actionneur électrique qui est muni de deux butées de vanne réglables ou non, la première butée limitant la distance entre le tube rectiligne et la surface d'obturation à une valeur faible, et la deuxième butée limitant la distance entre ledit tube et ladite surface à une valeur maximale, la première butée pouvant être dépassée au delà d'un certain effort produit par l'actionneur électrique, tandis que la deuxième butée ne peut jamais être dépassée, quel que soit l'effort produit par ledit actionneur.

La vanne tubulaire de réglage du taux de compression d'un moteur à taux de compression variable suivant la présente invention comprend un actionneur électrique dont la deuxième butée est constituée d'un ressort pré chargé qui repose sur une butée de rappel lorsque l'actionneur électrique ne produit pas un effort suffisant pour décoller ledit ressort de ladite butée de rappel.

La vanne tubulaire de réglage du taux de compression d'un moteur à taux de compression variable suivant la présente invention comprend un noyau qui est logé dans la chambre basse pression tandis que la bobine est logée à l'extérieur de ladite chambre, et le champ magnétique généré par ladite bobine lorsqu'elle est traversée par un courant électrique passant au travers d'un manchon de bobine solidaire du carter de vanne de sorte à attirer ledit noyau.

La vanne tubulaire de réglage du taux de compression d'un moteur à taux de compression variable suivant la présente invention comprend une surface d'obturation solidaire du carter de vanne qui est aménagée sur la face interne d'un bouchon d'obturation vissé dans ledit carter, ledit bouchon comprenant au moins un orifice axial et/ou radial positionné en périphérie externe de la zone de contact entre le tube rectiligne et ladite surface d'obturation, et ledit orifice reliant directement ou indirectement la chambre haute pression avec l'une ou l'autre des chambres supérieures ou inférieures du vérin de commande.

La vanne tubulaire de réglage du taux de compression d'un moteur à taux de compression variable suivant la présente invention comprend un siège anti retour qui est aménagé sur l'une des faces d'un porte siège anti retour de forme sensiblement cylindrique logé dans le carter de vanne, ledit porte siège étant muni d'au moins un conduit et/ou canal permettant au fluide hydraulique d'aller de la chambre basse pression vers la chambre haute pression lorsque le tube anti-retour n'est pas en contact avec le siège anti retour, et audit fluide hydraulique d'aller de la chambre haute pression vers la chambre basse pression lorsque le tube rectiligne n'est pas en contact avec la surface d'obturation.

La vanne tubulaire de réglage du taux de compression d'un moteur à taux de compression variable suivant la présente invention comprend un bouchon d'obturation vissé dans le carter de vanne qui comprime le porte siège anti retour et/ou le manchon de bobine, de sorte que ledit bouchon constitue l'élément de fixation dudit porte siège et dudit manchon de bobine sur ledit carter de vanne.

La vanne tubulaire de réglage du taux de compression d'un moteur à taux de compression variable suivant la présente invention comprend une pièce de révolution comportant des conduits d'entrée-sortie qui est directement vissée sur ou dans le carter cylindre du moteur à taux de compression variable.

La vanne tubulaire de réglage du taux de compression d'un moteur à taux de compression variable suivant la présente invention comprend une tête de traction qui coopère avec une rotule de traction de forme complémentaire à la surface, ladite rotule restant plaquée sur ladite surface par l'intermédiaire d'un ressort de rotulage qui tend à éloigner le tube rectiligne de l'actionneur électrique.

La description qui va suivre en regard des dessins annexés, donnés à titre d'exemples non limitatifs, permettra de mieux comprendre l'invention, les caractéristiques qu'elle présente et les avantages qu'elle est susceptible de procurer :
Figures 1 à 4 sont des vues en coupe schématique montrant un premier exemple de réalisation d'une vanne tubulaire de réglage du taux de compression pour moteur à taux de compression variable suivant la présente invention comportant un actionneur électrique dont le noyau est directement fixé sur un tube rectiligne.
Figure 5 est une vue en perspective éclatée illustrant le premier exemple de réalisation de la vanne tubulaire de réglage du taux de compression pour moteur à taux de compression variable suivant la présente invention.
Figures 6 à 8 sont des vues en coupe schématique représentant des variantes de réalisation de la vanne tubulaire de réglage du taux de compression pour moteur à taux de compression variable suivant la présente invention dont l'actionneur électrique est relié au tube rectiligne par une tige de traction.
Figure 9 est une vue en coupe schématique illustrant les principaux composants et leur positionnement dans un moteur à taux de compression variable d'une vanne tubulaire de réglage du taux de compression pour moteur à taux de compression variable suivant la présente invention.
Figures 10 une vue en perspective éclatée montrant le bloc moteur du moteur à taux de compression variable et le positionnement d'une vanne tubulaire de réglage du taux de compression pour moteur à taux de compression variable suivant la présente invention sur ledit bloc moteur.

### DESCRIPTION DE L'INVENTION:

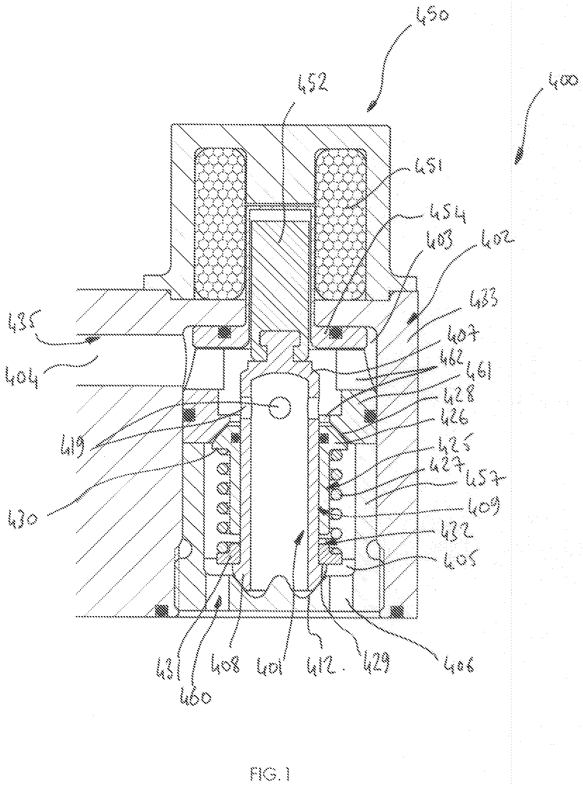

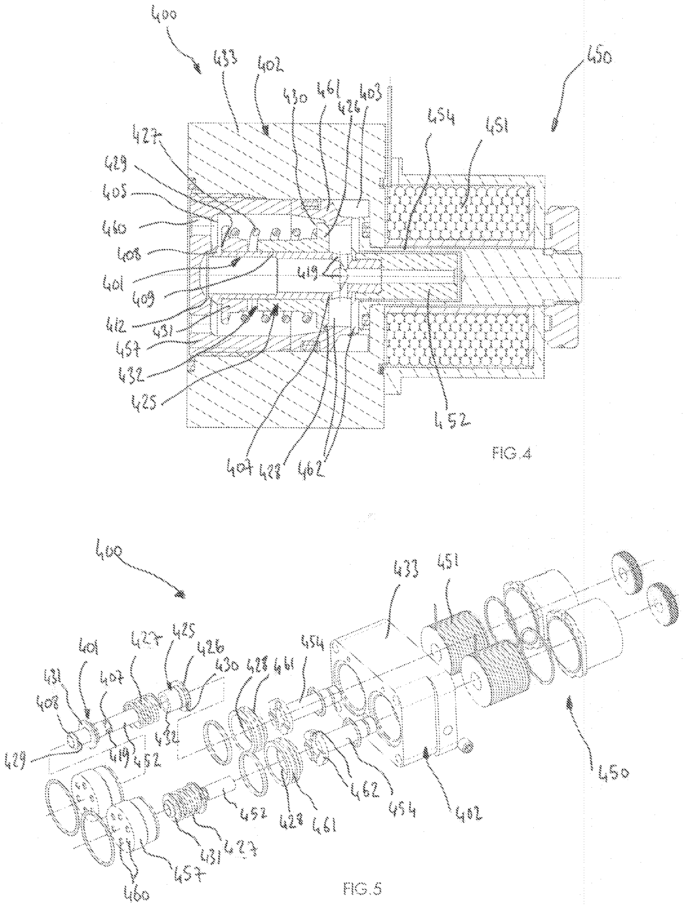

On a montré en figures 1 à 10 au moins une vanne tubulaire de réglage du taux de compression 400 pour moteur à taux de compression variable comprenant des moyens d'obturation d'au moins un conduit reliant la chambre supérieure 121 et inférieure 122 d'un vérin de commande hydraulique à double effet 8.

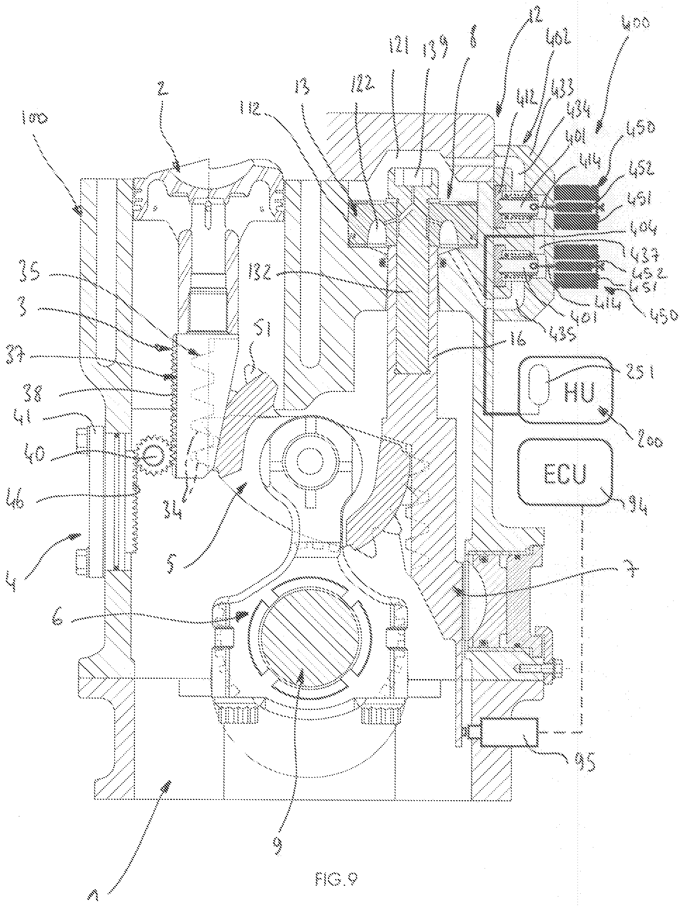

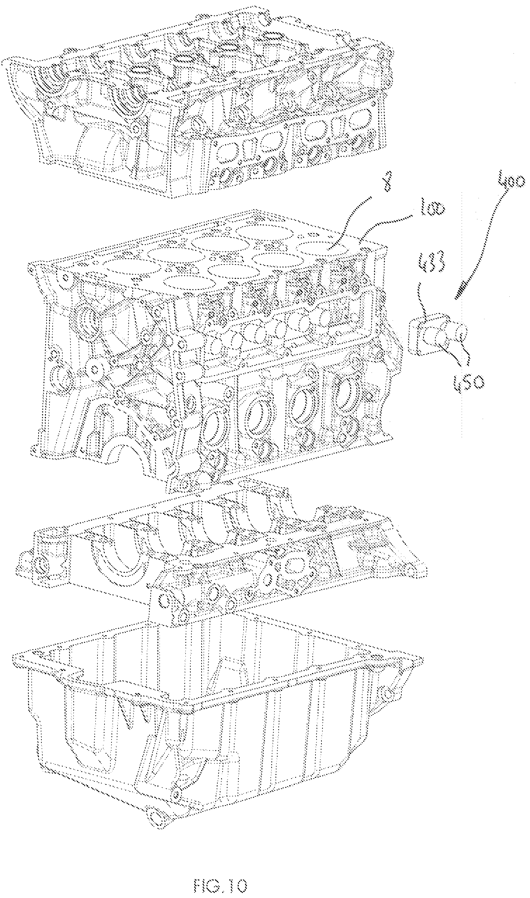

On a représenté en figures 9 et 10 selon les demandes de brevet et brevets d'invention appartenant au demandeur, le moteur à taux de compression variable qui comprend un dispositif de transmission mécanique 1 comportant dans la partie inférieure du piston de combustion 2 un organe de transmission 3 dit « crémaillère de piston » solidaire dudit piston et coopérant, d'une part avec un dispositif de guidage à roulement 4, et d'autre part avec une roue dentée 5.

L'organe de transmission ou crémaillère de piston 3 solidaire du piston 2 est pourvu sur l'une de ses faces d'une première crémaillère de forte dimension 35 dont les dents 34 coopèrent avec celles 51 de la roue dentée 5.

L'organe de transmission ou crémaillère de piston 3 comporte, à l'opposé de la première crémaillère 35, une seconde crémaillère 37 dont les dents 38 de faible dimension coopèrent avec celles d'un rouleau 40 du dispositif de guidage à roulement 4.

Le carter cylindre 100 est solidaire d'un support 41 comportant des crémaillères 46 assurant la synchronisation du déplacement du rouleau 40 du dispositif de guidage à roulement 4 avec celui du piston 2.

La roue dentée 5 coopère avec une bielle 6 reliée à un vilebrequin 9 afin de réaliser la transmission du mouvement entre le piston de combustion 2 et ledit vilebrequin 9.

La roue dentée 5 coopère, à l'opposé de l'organe de transmission ou crémaillère de piston 3, avec une crémaillère de commande 7 dont la position verticale par rapport au carter cylindres 100 est pilotée par un dispositif de contrôle 12 comportant le vérin de commande hydraulique à double effet 8, et un piston de vérin 13 qui est guidé dans un cylindre de vérin 112 aménagé dans le carter cylindres 100.

Le vérin de commande hydraulique à double effet 8 comporte au-dessus du piston de vérin 13 une chambre supérieure de vérin 121 et en dessous du piston dudit vérin 13 une chambre inférieure de vérin 122, lesdites chambres ayant une cylindrée différente l'une de l'autre à même course du piston de vérin 13.

Le vérin de commande hydraulique à double effet 8 est constitué d'une tige inférieure de vérin 16 solidaire de la crémaillère de commande 7 et d'une vis de serrage 132 pourvue d'une tête de serrage 139 logée dans la chambre supérieure de vérin 121 et permettant de fixer le piston de vérin 13 sur ladite tige inférieure de vérin 16 de la crémaillère de commande 7.

Le moteur à taux de compression variable peut comprendre au moins un calculateur 94 et au moins un capteur de position 95 permettant de mesurer la position verticale de la crémaillère de commande 7.

Le moteur à taux de compression variable peut comprendre au moins un capteur non représenté détectant le passage de la crémaillère de piston 3 de manière à pouvoir en déduire le taux de compression dudit moteur tenant compte de la position angulaire du vilebrequin 9 à laquelle le passage de la crémaillère de piston 3 a été détectée.

On a montré en figures 1 à 10 la vanne tubulaire de réglage du taux de compression 400 suivant la présente invention qui comprend au moins un tube rectiligne 401 pouvant se déplacer en translation longitudinale dans un carter de vanne 402 comportant une chambre basse pression 403 mise en relation avec un accumulateur de pression 251 par au moins un conduit 404, et une chambre haute pression 405 mise en relation avec l'une ou l'autre des chambres supérieures 121 ou inférieures 122 du vérin de commande 8 par au moins un conduit 406.

Le tube rectiligne 401 comporte une première extrémité 407 qui débouche dans la chambre basse pression 403 et une deuxième extrémité 408 débouchant dans ladite chambre haute pression 405.

Le tube rectiligne 401 comporte une deuxième extrémité 408 qui peut entrer en contact avec au moins une surface d'obturation 412 solidaire dudit carter de vanne 402 de sorte à boucher de façon la plus étanche possible.

La deuxième extrémité 408 du tube rectiligne 401 est maintenue en contact avec la surface d'obturation 412 par au moins un ressort anti retour et d'obturation 427.

La deuxième extrémité 408 du tube rectiligne 401 est troncosphérique et présente une ligne de contact avec la surface d'obturation 412 similaire à celle réalisée par une bille portant sur un siège.

La vanne tubulaire de réglage du taux de compression 400 comporte des moyens d'étanchéité 409 entre la surface externe dudit tube rectiligne 401 et le carter de vanne 402 isolant la chambre haute pression 405 de la chambre basse pression 403.

Les moyens d'étanchéité 409 sont constitués d'un tube anti retour 425 à l'intérieur duquel est logé le tube rectiligne 401, le tube rectiligne 401 pouvant se déplacer longitudinalement dans le tube anti retour 425, tandis que ledit tube anti retour 425 peut se déplacer longitudinalement par rapport au carter de vanne 402.

Les moyens d'étanchéité 409 entre le tube rectiligne 401 et le tube anti retour 425 sont constitués d'au moins un joint annulaire et/ou au moins un segment.

Ainsi, le tube rectiligne 401 réalise avec ledit tube anti retour 425 une étanchéité.

Le tube anti retour 425 comporte une extrémité 426 formant une surface d'obturation qui est la plus éloignée de la surface d'obturation 412 du tube rectiligne 401.

La surface d'obturation 426 est maintenue en contact par le ressort anti retour et d'obturation 427 avec un siège anti retour 428 aménagé dans le carter de vanne 402 de sorte à interdire la passage du fluide hydraulique depuis la chambre haute pression 405 vers la chambre basse pression 403, mais à autoriser le passage dudit fluide depuis la chambre basse pression 403 vers la chambre haute pression 405.

On note que des moyens d'étanchéité complémentaires peuvent être prévus entre la surface externe du tube rectiligne 401 et celle interne du tube anti retour 425, lesdits moyens étant constitués d'au moins un joint annulaire et/ou au moins un segment, ledit joint annulaire pouvant par exemple être constitué de deux anneaux logés dans une même gorge, le premier anneau étant en matériau souple et logé au fond de ladite gorge, tandis que le deuxième anneau est constitué d'un matériau moins souple mais résistant à l'abrasion et assurant le contact avec la surface externe du tube rectiligne 401 ou la surface interne du tube anti retour 425.

La vanne tubulaire de réglage du taux de compression 400 comporte au moins un actionneur électrique 450 capable d'appliquer au tube rectiligne 401 un effort antagoniste à celui produit par le ressort anti retour et d'obturation 427, ledit effort étant suffisant pour décoller le tube rectiligne 401 de la surface d'obturation 412 lorsque ledit actionneur est traversé par un courant électrique.

Le tube rectiligne 401 est relié à l'actionneur électrique 450 par une tige de traction 414 dont la fixation sur ledit tube n'obture pas totalement ledit tube et laisse un passage axial et/ou radial permettant au fluide hydraulique de circuler à l'intérieur dudit tube.

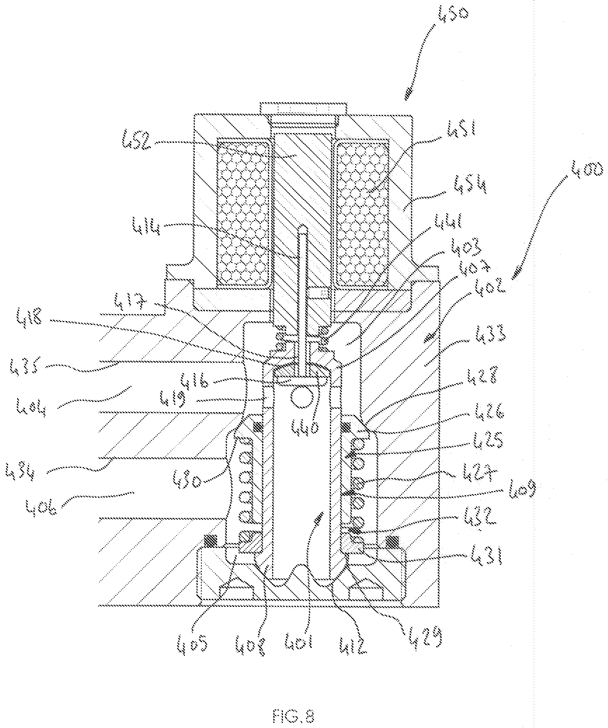

L'extrémité de la tige de traction 414 se termine par une tête de traction 416 de diamètre supérieur à un trou 417 aménagé dans une surface 418 qui bouche la première extrémité 407 du tube rectiligne 401 (figure 8)

La tige de traction 414 traverse le trou 417, tandis que la tête 416 est logée dans le tube 401, ce dernier comportant au moins un orifice radial et/ou axial 419 débouchant dans la chambre basse pression 403.

La vanne tubulaire de réglage du taux de compression 400 comporte des moyens d'étanchéité entre la tige de traction 414 et le carter de vanne 402 qui sont constitués d'au moins un joint annulaire et/ou au moins un segment.

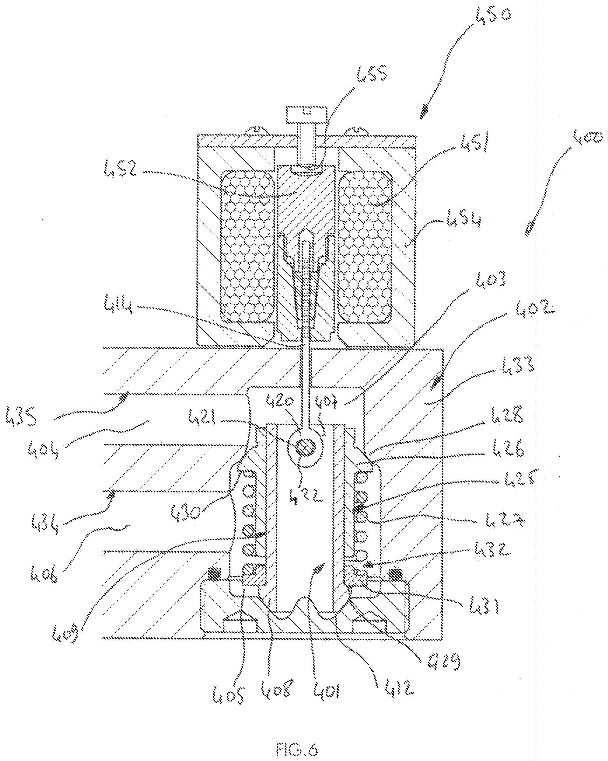

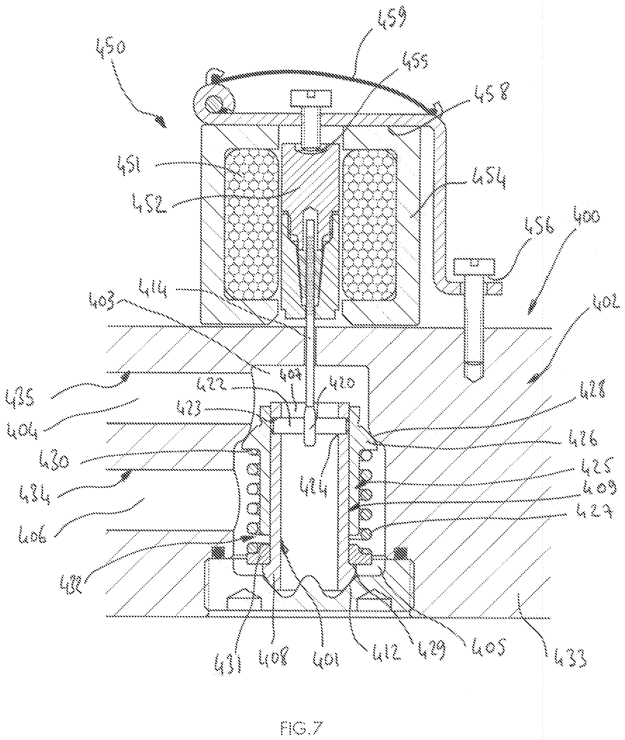

On a représenté en figures 6 et 7 une variante de l'extrémité de la tige de traction 414 qui peut se terminer par une tête d'articulation 420 plate percée d'un trou 421 que traverse un axe 422, les deux extrémités dudit axe 422 étant logées dans des trous 423, 424 aménagés radialement dans le tube rectiligne 401, au voisinage de la première extrémité 407 dudit tube.

La vanne tubulaire de réglage du taux de compression 400 comporte un actionneur électrique 450 qui est logé dans la chambre basse pression 403.

La vanne tubulaire de réglage du taux de compression 400 comporte un actionneur électrique 450 qui est logé à l'extérieur du carter de vanne 402 tandis que la tige de traction 414 qui le relie au tube rectiligne 401 traverse le carter de vanne 402 tout en constituant avec ce dernier une étanchéité.

On note que la section du tube rectiligne 401 au niveau de l'étanchéité que ledit tube constitue avec le tube anti retour 425 est plus petite que la section dudit tube rectiligne 401 au niveau de son contact avec la surface d'obturation 412.

Cet écart de section permet, lorsque la pression régnant dans la chambre haute pression 405 est supérieure à la pression régnant dans la chambre basse pression 403, de fournir un effort qui s'additionne à celui produit par le ressort anti retour et d'obturation 427 pour augmenter la pression de contact entre la deuxième extrémité 408 du tube rectiligne 401 et la surface d'obturation 412, ou pour éviter tout décollement non souhaité entre ledit tube et ladite surface.

On note que l'extrémité 426 formant la surface d'obturation du tube anti retour 425 qui est maintenue en contact avec le siège anti retour 428 est troncosphérique et présente une ligne de contact avec ledit siège anti retour 428 similaire à celle réalisée par une bille portant sur un siège.

Le ressort anti retour et d'obturation 427 prend appui d'un coté, sur le tube rectiligne 401 au voisinage de sa deuxième extrémité 408, et de l'autre coté, sur le tube anti retour 425 au voisinage de son extrémité 426 maintenue en contact avec le siège anti retour 428.

Selon cette configuration, chacune des extrémités du ressort anti retour et d'obturation 427 peut prendre appui sur un épaulement 429, 430 réalisé en périphérie du tube rectiligne 401 et du tube anti retour 425. Selon un mode particulier de réalisation, chaque épaulement 429, 430 peut être élargi au moyen d'une rondelle 431.

On note qu'une butée 432 est aménagée sur le tube anti retour 425 et/ou sur le tube rectiligne 401, ladite butée limitant la distance maximale entre le tube anti retour 425 et le siège anti retour 428 d'une part, et limitant dans les mêmes proportions la distance maximale entre le tube rectiligne 401 et la surface d'obturation 412 d'autre part.

Selon un mode particulier de réalisation, ladite butée 432 peut consister en une protubérance ou en un épaulement aménagé au voisinage de la deuxième extrémité 408 du tube rectiligne 401 sur lequel vient buter l'extrémité du tube anti retour 425 la plus éloignée du siège anti retour 428.

L'actionneur électrique 450 est constitué d'une bobine de fil conducteur 451 qui attire un noyau ou une palette magnétique 452 lorsque ladite bobine est traversée par un courant électrique.

Le noyau ou palette magnétique 452 est directement fixé sur le tube rectiligne 401 soit par vissage, sertissage, collage ou par tout autre moyen de fixation connu de l'homme de l'art.

On note que selon un premier mode particulier de réalisation, la quantité de courant traversant ladite bobine 451 peut être contrôlée par modulation de largeur d'impulsion, méthode connue en anglais sous le terme de « Pulse Width Modulation ».

Selon un deuxième mode particulier de réalisation combinable avec le premier, la charge d'un condensateur ayant préalablement accumulé du courant peut être transférée à ladite bobine 451 par la commutation d'un transistor. Cette configuration permettant de conférer à l'actionneur électrique 450 une forte puissance sur une durée brève.

Selon ce deuxième mode de réalisation, le condensateur et le transistor sont placés à proximité de la bobine 451 pour limiter la longueur de câble nécessaire au transfert de la charge depuis ledit condensateur vers ladite bobine.

L'actionneur électrique 450 est constitué d'un moteur électrique rotatif qui peut faire tourner dans un sens ou dans l'autre une vis libre en rotation par rapport au carter de vanne 402 mais fixe en translation par rapport audit carter, ladite vis étant vissée directement ou indirectement dans le tube rectiligne 401 et ledit tube se déplaçant en translation par rapport audit carter lorsque ladite vis tourne sous l'action du moteur électrique rotatif.

Le carter de vanne 402 est constitué d'au moins une pièce de révolution comportant des conduits d'entrée-sortie fixés sur une platine de distribution 433, ladite platine 433 étant elle-même fixée sur le carter cylindre 100 du moteur à taux de compression variable

La platine de distribution 433 peut servir de support à une ou plusieurs vannes tubulaires de réglage du taux de compression 400 et comporter des conduits 434, 435 mettant en relation lesdites vannes avec les chambres supérieures 121 et inférieures 122 du vérin de commande hydraulique à double effet 8 d'une part, et avec l'accumulateur de pression 251 d'autre part (figure 9).

La platine de distribution 433 sert de carter de vanne 402 à au moins une vanne tubulaire de réglage du taux de compression 400.

L'actionneur électrique 450 est muni d'au moins une butée de vanne 455 réglable ou non limitant la course maximale de translation linéaire du tube rectiligne 401 (figure 6).

On a montré en figure 7 que l'actionneur électrique 450 peut être muni de deux butées de vanne 455, 456 réglables ou non, la première butée 455 limitant la distance entre le tube rectiligne 401 et la surface d'obturation 412 à une valeur faible, et la deuxième butée 456 limitant la distance entre ledit tube 401 et ladite surface à une valeur maximale, la première butée 455 pouvant être dépassée au delà d'un certain effort produit par l'actionneur électrique 450, tandis que la deuxième butée 456 ne peut jamais être dépassée, quel que soit l'effort produit par ledit actionneur.

La deuxième butée de vanne 456 de l'actionneur électrique 450 est constituée d'un ressort pré chargé 459 qui repose sur une butée de rappel 458 lorsque l'actionneur électrique 450 ne produit pas un effort suffisant pour décoller ledit ressort 459 de ladite butée de rappel 458.

Selon un mode particulier de réalisation, le ressort pré chargé 459 peut être constitué d'une lame d'acier, d'une bague métallique ou de tout autre moyen offrant une résistance forte lorsqu'il repose sur sa butée de rappel 458 et une résistance plus faible lorsque la distance entre le tube rectiligne 401 et la surface d'obturation 412 est maximale.

On a représenté en figures 1 à 5 que le noyau 452 est logé dans la chambre basse pression 403 tandis que la bobine 451 est logée à l'extérieur de ladite chambre 403.

Ainsi, le champ magnétique généré par ladite bobine 451 lorsqu'elle est traversée par un courant électrique passe au travers d'un manchon de bobine 454 solidaire du carter de vanne 402 de sorte à attirer ledit noyau 452.

La surface d'obturation 412 solidaire du carter de vanne 402 est aménagée sur la face interne d'un bouchon d'obturation 457 vissé dans ledit carter 402.

Le bouchon d'obturation 457 comprend au moins un orifice axial et/ou radial 460 positionné en périphérie externe de la zone de contact entre le tube rectiligne 401 et ladite surface d'obturation 412, et ledit orifice 460 reliant directement ou indirectement la chambre haute pression 405 avec l'une ou l'autre des chambres supérieures 121 ou inférieures 122 du vérin de commande 8.

Le siège anti retour 428 est aménagé sur l'une des faces d'un porte siège anti retour 461 de forme sensiblement cylindrique logé dans le carter de vanne 402.

Le porte siège 461 est muni d'au moins un conduit et/ou canal 462 permettant au fluide hydraulique d'aller de la chambre basse pression 403 vers la chambre haute pression 405 lorsque le tube anti-retour 425 n'est pas en contact avec le siège anti retour 428, et audit fluide hydraulique d'aller de la chambre haute pression 405 vers la chambre basse pression 403 lorsque le tube rectiligne 401 n'est pas en contact avec la surface d'obturation 412.

Le bouchon d'obturation 457 vissé dans le carter de vanne 402 comprime le porte siège anti retour 461 et/ou le manchon de bobine 454, de sorte que ledit bouchon 457 constitue l'élément de fixation dudit porte siège 461 et dudit manchon de bobine 454 sur ledit carter de vanne 402.

Selon cette configuration et ses éventuelles variantes, des joints peuvent étancher les différentes pièces entre-elles et/ou réaliser une étanchéité entre lesdites pièces et le carter de vanne 402.

La pièce de révolution comportant des conduits d'entrée-sortie est directement vissée sur ou dans le carter cylindre 100 du moteur à taux de compression variable ou fixée sur ledit carter par toute liaison ou fixation mécanique connue de l'homme de l'art.

La tête de traction 416 coopère avec une rotule de traction 440 de forme complémentaire à la surface 418, ladite rotule restant plaquée sur ladite surface par l'intermédiaire d'un ressort de rotulage 441 qui tend à éloigner le tube rectiligne 401 de l'actionneur électrique 450

### FONCTIONNEMENT:

Selon un mode particulier de réalisation, le fonctionnement de la vanne tubulaire de réglage du taux de compression 400 d'un moteur à taux de compression variable est le suivant :
Comme illustré en figure 9, lorsque le moteur à taux de compression variable doit rester sur un taux de compression donné, la deuxième extrémité 408 des deux tubes rectilignes 401 de chaque vanne tubulaire 400 qui permettent respectivement de laisser passer le fluide hydraulique de la chambre supérieure 121 à la chambre inférieure 122 du vérin de commande 8 et inversement restent en contact chacun avec leur surface d'obturation respective 412.

En ce cas, ledit fluide ne peut se déplacer ni depuis la chambre supérieure 121 vers la chambre inférieure 122, ni en sens inverse, ce qui a pour effet de maintenir la position de la crémaillère de commande 7 dudit moteur à une valeur déterminée, et de maintenir fixe le taux de compression dudit moteur.

Tenant compte des conditions de fonctionnement du moteur à taux de compression variable, il est régulièrement nécessaire d'en adapter le taux de compression.

Selon le cas, cette variation du taux de compression dudit moteur sert à maximiser les performances ou le rendement dudit moteur ou encore, à améliorer le fonctionnement du catalyseur 3-voies.

Si tenant compte de ces diverses nécessités, le calculateur (ECU) 94 du moteur à taux de compression variable doit augmenter le taux de compression dudit moteur, il envoie un courant électrique à l'actionneur électrique 450 relié au tube rectiligne 401 de la chambre inférieure 122 du vérin de commande 8, ce qui a pour effet d'éloigner ledit tube 401 de sa surface d'obturation 412, ledit actionneur 450 agissant sur ledit tube 401 par l'intermédiaire de sa tige de traction 414.

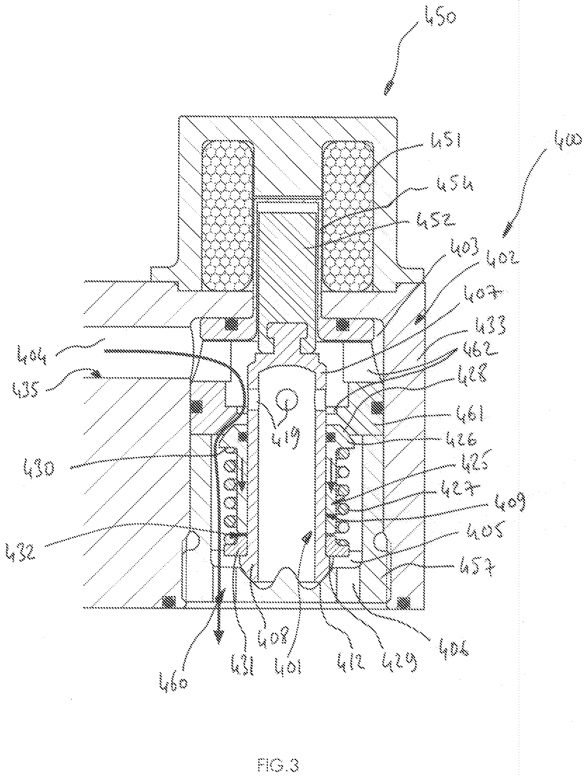

Ainsi éloigné de sa surface d'obturation 412, ledit tube rectiligne 401 permet au fluide hydraulique de sortir de la chambre inférieure de vérin 122 et pénétrer dans la chambre supérieure de vérin 121 via le canal de transfert 437, le tube anti retour 425 de la chambre supérieure de vérin 121 laissant quant à lui le fluide hydraulique rentrer dans ladite chambre supérieure 121, mais ne le laissant pas en ressortir, du fait de son effet anti-retour (figure 3).

Comme on le voit sur la figure 9 illustrant la présente invention, aucune pompe hydraulique n'est nécessaire pour assurer le déplacement de la crémaillère de commande 7 du moteur à taux de compression variable.

Ledit déplacement est en effet produit par les efforts alternatifs qui sont imprimés à ladite crémaillère de commande 7 par la pression des gaz contenus dans la chambre de combustion du moteur et/ou par les efforts résultants de l'inertie des principales pièces en mouvement dudit moteur que sont la roue dentée 5, le piston de combustion 2, et la crémaillère de piston 3 et son dispositif de guidage à roulement 4.

Comme on peut aisément le déduire à la vue de la figure 9, le déplacement de la crémaillère de commande 7 en direction de la chambre inférieure de vérin 122 induit une augmentation de volume de la chambre supérieure de vérin 121 plus grande que la diminution de volume de ladite chambre inférieure.

Ceci résulte de l'absence de tige supérieure de vérin de commande 8. De ce fait, la pression dans la chambre supérieure de vérin 121 diminue lorsque la crémaillère de commande 7 se déplace en direction de la chambre inférieure de vérin 122. Le réapprovisionnement en fluide hydraulique de ladite chambre supérieure de vérin 121 est alors assuré par le fluide stocké dans l'accumulateur de pression 251 que comporte la centrale hydraulique 200 du moteur à taux de compression variable.

A l'inverse, lorsque le calculateur (ECU) 94 du moteur à taux de compression variable doit abaisser le taux de compression dudit moteur, il envoie un courant électrique à l'actionneur électrique 450 relié au tube rectiligne 401 de la chambre supérieure 121 du vérin de commande 8, ce qui a pour effet d'éloigner ledit tube 401 de sa surface d'obturation 412, ledit actionneur 450 agissant sur ledit tube 401 par l'intermédiaire de sa tige de traction 414.

Ainsi éloigné de sa surface d'obturation 412, ledit tube rectiligne 401 permet au fluide hydraulique de sortir de la chambre supérieure de vérin 121 et de pénétrer dans la chambre inférieure de vérin 122 via le canal de transfert 437. En ce cas, le tube anti retour 425 de la chambre inférieure de vérin 122 laisse le fluide hydraulique rentrer dans ladite chambre, mais ne le laisse pas en ressortir, du fait de l'effet anti-retour dudit tube 425.

Comme on peut aisément le déduire de la figure 9, le déplacement de la crémaillère de commande 7 en direction de la chambre supérieure de vérin 121 induit une augmentation de volume de la chambre inférieure de vérin 122 plus petite que la diminution de volume de la chambre supérieure de vérin 121, du fait de l'absence de tige supérieure de vérin.

De ce fait, le volume total de fluide hydraulique contenu dans les deux chambres de vérin 121, 122 du vérin de commande 8 diminue. Il résulte de ce fait qu'une partie du volume de fluide expulsé par la chambre supérieure de vérin 121 réalimente la chambre inférieure de vérin 122 via le canal de transfert 437, tandis que la partie restante réalimente l'accumulateur de pression 251 que comporte la centrale hydraulique 200 du moteur à taux de compression variable.

On note que le volume de fluide hydraulique retourné audit accumulateur de pression 251 est approximativement égal à la différence entre le volume de la chambre supérieure de vérin 121 balayé par le piston de vérin 13 et le volume de la chambre inférieure de vérin 122 simultanément balayé par ledit piston 13 lors de la manoeuvre de déplacement effectuée par ledit piston 13, ladite manoeuvre visant à abaisser le taux de compression du moteur à taux de compression variable.

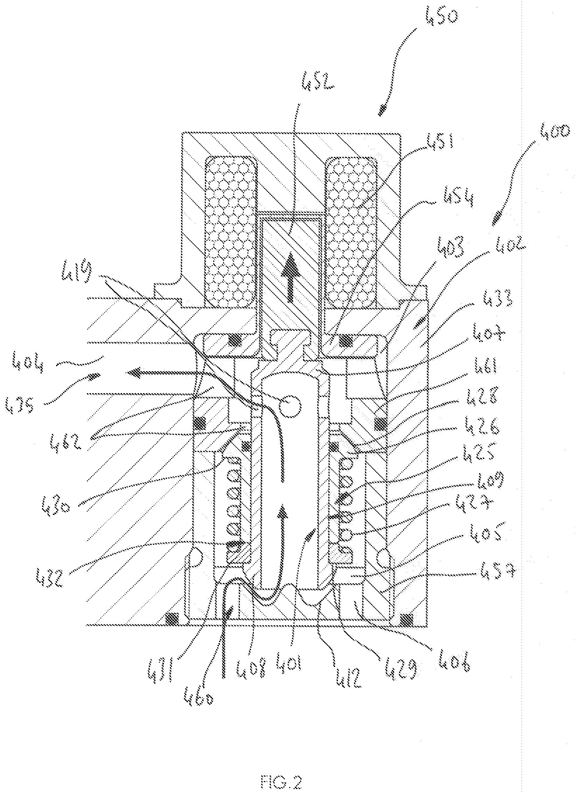

Comme on le constate, sous l'action conjuguée des tubes rectilignes 401, des tubes anti retour 425 et des efforts alternatifs appliqués à la crémaillère de commande 7 par l'attelage mobile du moteur à taux de compression variable, le vérin de commande 8 se comporte comme un cliquet anti-retour, ladite crémaillère 7 pouvant se déplacer dans la direction de la chambre dont le tube rectiligne 401 est maintenu éloigné de sa surface d'obturation 412 par son actionneur électrique 450, comme illustré en figure 2 mais non dans la direction inverse.

Qu'il s'agisse d'une manoeuvre visant à augmenter le taux de compression du moteur à taux de compression variable ou d'une autre visant à l'abaisser, le moment où le tube rectiligne 401 correspondant, maintenu éloigné de sa surface d'obturation 412 par son actionneur électrique 450, doit être remis au contact de ladite surface, est déterminé par le calculateur (ECU) 94 du moteur à taux de compression variable.

Ledit moment est déduit par ledit calculateur (ECU) 94 à partir de la position de la crémaillère de commande 7, ladite position lui étant retournée par un capteur de position 95 avec lequel il coopère, ledit capteur 95 mesurant en permanence la position verticale de ladite crémaillère 7.

Ainsi renseigné, le calculateur (ECU) 94 peut remettre le tube rectiligne 401 en contact avec sa surface d'obturation 412 lorsque ladite crémaillère de commande 7 a atteint la position correspondant au taux de compression recherché (figure1).

La coopération entre le calculateur (ECU) 94 et le capteur de position 95 de la crémaillère de commande 7 permet également de compenser toute dérive non souhaitée de la position de ladite crémaillère 7. Ladite dérive peut résulter de diverses fuites, qu'il s'agisse de fuites entre la chambre supérieure de vérin 121 et inférieure de vérin 122 dues à un défaut d'étanchéité du joint du piston de vérin 13, ou qu'il s'agisse de fuites entre l'une quelconque desdites chambres de vérin 121, 122 et l'extérieur du vérin de commande 8.

Pour compenser ladite dérive, le calculateur (ECU) 94 peut ordonner l'éloignement temporaire entre le tube rectiligne 401 et sa surface d'obturation 412 de la chambre opposée à la direction de la dérive de ladite crémaillère de commande 7, jusqu'à ce que ladite crémaillère 7 revienne à la position recherchée.

Lorsqu'une fuite survient entre l'une quelconque des chambres supérieures de vérin 121 ou inférieures 122 et l'extérieur dudit vérin de commande 8, ledit vérin 8 est réapprovisionné en fluide hydraulique par l'accumulateur de pression 251 de la centrale hydraulique 200 via le tube anti retour 425 de la chambre antagoniste à la chambre fuyante, tandis que le tube rectiligne 401 de la chambre étanche est maintenu partiellement éloigné et/ou cycliquement éloigné de sa surface d'obturation 412 de sorte que soit générée une contre fuite visant à conserver à la crémaillère de commande 7 une position conforme à sa position de consigne telle que déterminée par le calculateur (ECU) 94.

Si les chambres supérieures de vérin 121 et inférieures 122 sont toutes deux fuyantes, le calculateur (ECU) 94 constate la direction et la vitesse de la dérive de la crémaillère de commande 7 et éloigne en conséquence le tube rectiligne 401 de la chambre de vérin 121 ou 122 placée en direction opposée au sens de la dérive de sa surface d'obturation 412, cette dernière stratégie permettant également de conserver à la crémaillère de commande 7 une position conforme à la consigne telle que déterminée par le calculateur (ECU) 94. Selon un mode particulier de réalisation de la vanne tubulaire de réglage du taux de compression 400 selon l'invention, la position angulaire du vilebrequin 9 du moteur à taux de compression variable peut être prise en compte par le calculateur (ECU) 94 lors des manoeuvres de déplacement de la crémaillère de commande 7.

Selon ce mode de gestion dudit moteur par le calculateur (ECU) 94, le déplacement de la crémaillère de commande 7 n'est autorisé que sur certaines plages de position angulaire du vilebrequin 9, tandis qu'il est interdit sur d'autres plages.

Cette stratégie de pilotage permet par exemple de ne manoeuvrer ladite crémaillère de commande 7 que durant les courses de détente et d'échappement du moteur à taux de compression variable, tout en interdisant le déplacement de ladite crémaillère 7 durant la course d'admission et de compression.

Par exemple, ladite stratégie permet d'adapter précisément la préparation du mélange air-carburant du cycle au taux de compression effectif qui va suivre ladite préparation, ce qui permet par exemple de s'assurer que l'auto allumage dudit mélange se déclenchera bien au moment recherché.

Quelle que soit la chambre de vérin 121, 122 considérée, la prise en compte par le calculateur (ECU) 94 de la position angulaire instantanée du vilebrequin 9 permet également audit calculateur (ECU) 94 de gérer plus finement la distance entre le tube rectiligne 401 et sa surface d'obturation 412 lorsque ladite distance est volontairement faible, et est réglée par adaptation de la puissance de la bobine 451 de l'actionneur électrique 450 par modulation de la largeur d'impulsion du courant qui alimente ladite bobine.

En ce cas, la différence de pression entre l'amont et l'aval du tube rectiligne 401 varie cycliquement, ce qui a pour effet d'aider ou de contrer l'effort généré par l'actionneur électrique 450. Cette variation cyclique de la pression différentielle amont/aval peut être préalablement enregistrée dans la mémoire du calculateur (ECU) 94 pour chaque position angulaire du vilebrequin 9 et pour chaque point de fonctionnement du moteur à taux de compression variable.

Ces valeurs préenregistrées permettent au calculateur (ECU) 94 de moduler la largeur d'impulsion du courant qui alimente ladite bobine 451 et donc la puissance de cette dernière en fonction de la position angulaire courante dudit vilebrequin 9 et tenant compte du point de fonctionnement du moteur, de sorte à obtenir une distance la plus stable possible entre le tube rectiligne 401 et sa surface d'obturation 412 et en tout état de cause, de prévenir tout affolement dudit tube rectiligne 401 en déplacement longitudinal.

Outre prendre en compte la position angulaire du vilebrequin 9 du moteur à taux de compression variable, le calculateur (ECU) 94 peut également tenir compte de la viscosité du fluide hydraulique. Ainsi, la distance entre le tube rectiligne 401 et sa surface d'obturation 412 et la durée de maintien à distance peuvent être corrigées par le calculateur (ECU) 94 en fonction de ladite viscosité afin d'augmenter la précision de positionnement de la crémaillère de commande 7.

Ladite viscosité peut notamment être déduite par le calculateur (ECU) 94 à partir de la température dudit fluide, ladite température étant retournée audit calculateur (ECU) 94 par un capteur.

On note que selon un mode particulier de réalisation illustré en figure 7, l'actionneur électrique 450 de la vanne tubulaire de réglage du taux de compression 400 selon l'invention peut comporter deux butées 455, 456 qui établissent un lien mécanique entre la distance entre le tube rectiligne 401 et sa surface d'obturation 412 et la puissance de traction délivrée par ledit actionneur 450.

Lorsqu'une faible puissance électrique est appliquée aux bornes de l'actionneur électrique 450, la distance entre le tube rectiligne 401 et sa surface d'obturation 412 est maintenue à une valeur faible par la première butée 455. Au delà d'une certaine puissance électrique appliquée aux bornes de l'actionneur électrique 450, la deuxième butée 456 peut être atteinte mais jamais dépassée.

Cette deuxième butée 456 définit la distance maximale autorisée entre le tube rectiligne 401 et sa surface d'obturation 412. Pour obtenir ce résultat, la première butée 455 est maintenue par exemple, à une certaine distance de la surface d'obturation 412 par un ressort pré chargé 459 ou par tout autre système de verrouillage non représenté.

Ledit système de verrouillage est lui-même appuyé par exemple sur la butée 458 infranchissable qui définit sa distance minimale par rapport à la surface d'obturation 412.

On remarque que pour un effort donné exercé sur la crémaillère de commande 7, la distance maximale entre le tube rectiligne 401 et sa surface d'obturation 412 permet d'obtenir une grande vitesse de déplacement pour ladite crémaillère 7, tandis que la distance faible entre le tube rectiligne 401 et sa surface d'obturation 412 permet d'obtenir une petite vitesse de déplacement pour ladite crémaillère de commande 7.

Ladite grande vitesse permet d'aller rapidement d'une position de piston de vérin 13 éloignée de la position de consigne à une autre position voisine de ladite position de consigne, tandis que la petite vitesse permet d'aller de ladite position voisine de ladite position de consigne, à ladite position de consigne.

Ladite petite vitesse peut également être utilisée pour compenser la dérive lente de la position de la crémaillère de commande 7 induite par d'éventuelles fuites hydrauliques, ou pour aller d'une position de consigne à une autre position de consigne lorsque lesdites positions sont voisine l'une de l'autre.

## Revendications

1. Vanne tubulaire de réglage du taux de compression d'un moteur à taux de compression variable comprenant un carter cylindres (100) recevant un vérin de commande hydraulique à double effet (8) qui comporte une chambre supérieure (121) et une chambre inférieure (122) remplies d'un fluide hydraulique et au moins un piston de vérin (13) relié à une crémaillère de commande (7), ladite vanne tubulaire de réglage du taux de compression comprenant au moins un tube rectiligne (401) pouvant se déplacer en translation longitudinale dans un carter de vanne (402) comportant une chambre basse pression (403) mise en relation avec un accumulateur de pression (251) par au moins un conduit (404), et une chambre haute pression (405) mise en relation avec l'une ou l'autre des chambres supérieures (121) ou inférieures (122) du vérin de commande (8) par au moins un conduit (406), ledit tube rectiligne (401) comportant une première extrémité (407) débouchant dans ladite chambre basse pression (403) et une deuxième extrémité (408) débouchant dans ladite chambre haute pression (405), ladite deuxième extrémité (408) pouvant entrer en contact avec au moins une surface d'obturation (412) solidaire dudit carter de vanne (402) de sorte à boucher de façon la plus étanche possible ladite deuxième extrémité, ledit tube rectiligne (401) étant maintenu en contact avec la surface d'obturation (412) par au moins un ressort anti retour et d'obturation (427) et au moins un actionneur électrique (450) capable d'appliquer au tube rectiligne (401) un effort antagoniste à celui produit par le ressort anti retour et d'obturation (427), ledit effort étant suffisant pour décoller le tube rectiligne (401) de la surface d'obturation (412) lorsque ledit actionneur est traversé par un courant électrique, **caractérisée en ce que** la vanne tubulaire de réglage comprend des moyens d'étanchéité (409) entre la surface externe dudit tube rectiligne (401) et le carter de vanne (402) isolant la chambre haute pression (405) de la chambre basse pression (403), lesdits moyens d'étanchéité (409) étant constitués d'un tube anti retour (425) à l'intérieur duquel est logé le tube rectiligne (401), le tube rectiligne (401) pouvant se déplacer longitudinalement dans le tube anti retour (425), tandis que ledit tube anti retour (425) peut se déplacer longitudinalement par rapport au carter de vanne (402), ledit tube rectiligne (401) réalisant avec ledit tube anti retour (425) une étanchéité, ledit tube anti retour (425) comportant une extrémité (426) qui est la plus éloignée de la surface d'obturation (412) du tube rectiligne (401) qui est maintenue en contact par le ressort anti retour et d'obturation (427) avec un siège anti retour (428) aménagé dans le carter de vanne (402) de sorte à interdire la passage du fluide hydraulique depuis la chambre haute pression (405) vers la chambre basse pression (403), mais à autoriser le passage dudit fluide depuis la chambre basse pression (403) vers la chambre haute pression (405).

2. Vanne tubulaire de réglage du taux de compression d'un moteur à taux de compression variable suivant la revendication 1, **caractérisée en ce que** la deuxième extrémité (408) du tube rectiligne (401) est troncosphérique et présente une ligne de contact avec la surface d'obturation (412) similaire à celle réalisée par une bille portant sur un siège.

3. Vanne tubulaire de réglage du taux de compression d'un moteur à taux de compression variable suivant la revendication 1, **caractérisée en ce que** le tube rectiligne (401) est relié à l'actionneur électrique (450) par une tige de traction (414) dont la fixation sur ledit tube n'obture pas totalement ledit tube et laisse un passage axial et/ou radial permettant au fluide hydraulique de circuler à l'intérieur dudit tube.

4. Vanne tubulaire de réglage du taux de compression d'un moteur à taux de compression variable suivant la revendication 3, **caractérisée en ce que** l'extrémité de la tige de traction (414) se termine par une tête de traction (416) de diamètre supérieur à un trou (417) aménagé dans une surface (418) qui bouche la première extrémité (407) du tube rectiligne (401), ladite tige (414) traversant ledit trou (417) et ladite tête (416) étant logée dans ledit tube (401), ce dernier comportant au moins un orifice radial et/ou axial (419) débouchant dans la chambre basse pression (403).

5. Vanne tubulaire de réglage du taux de compression d'un moteur à taux de compression variable suivant la revendication 3, **caractérisée en ce que** l'extrémité de la tige de traction (414) se termine par une tête d'articulation (420) plate percée d'un trou (421) que traverse un axe (422), les deux extrémités dudit axe (422) étant logées dans des trous (423, 424) aménagés radialement dans le tube rectiligne (401), au voisinage de la première extrémité (407) dudit tube.

6. Vanne tubulaire de réglage du taux de compression d'un moteur à taux de compression variable suivant la revendication 1, **caractérisée en ce que** l'actionneur électrique (450) est logé dans la chambre basse pression (403).

7. Vanne tubulaire de réglage du taux de compression d'un moteur à taux de compression variable suivant les revendications 1 et 3, **caractérisée en ce que** l'actionneur électrique (450) est logé à l'extérieur du carter de vanne (402) tandis que la tige de traction (414) qui le relie au tube rectiligne (401) traverse le carter de vanne (402) tout en constituant avec ce dernier une étanchéité.

8. Vanne tubulaire de réglage du taux de compression d'un moteur à taux de compression variable suivant la revendication 1, **caractérisée en ce que** la section du tube rectiligne (401) au niveau de l'étanchéité que ledit tube constitue avec le tube anti retour (425) est plus petite que la section dudit tube rectiligne (401) au niveau de son contact avec la surface d'obturation (412).

9. Vanne tubulaire de réglage du taux de compression d'un moteur à taux de compression variable suivant la revendication 1, **caractérisée en ce que** l'extrémité (426) du tube anti retour (425) qui est maintenue en contact avec le siège anti retour (428) est troncosphérique et présente une ligne de contact avec ledit siège anti retour (428) similaire à celle réalisée par une bille portant sur un siège.

10. Vanne tubulaire de réglage du taux de compression d'un moteur à taux de compression variable suivant la revendication 1, **caractérisée en ce que** le ressort anti retour et d'obturation (427) prend appui d'un coté, sur le tube rectiligne (401) au voisinage de sa deuxième extrémité (408), et de l'autre coté, sur le tube anti retour (425) au voisinage de son extrémité (426) maintenue en contact avec le siège anti retour (428).

11. Vanne tubulaire de réglage du taux de compression d'un moteur à taux de compression variable suivant la revendication 1, **caractérisée en ce qu'**une butée (432) est aménagée sur le tube anti retour (425) et/ou sur le tube rectiligne (401), ladite butée limitant la distance maximale entre le tube anti retour (425) et le siège anti retour (428) d'une part, et limitant dans les mêmes proportions la distance maximale entre le tube rectiligne (401) et la surface d'obturation (412) d'autre part.

12. Vanne tubulaire de réglage du taux de compression d'un moteur à taux de compression variable suivant la revendication 3, **caractérisée en ce qu'elle** comporte des moyens d'étanchéité entre la tige de traction (414) et le carter de vanne (402) qui sont constitués d'au moins un joint annulaire et/ou au moins un segment.

13. Vanne tubulaire de réglage du taux de compression d'un moteur à taux de compression variable suivant la revendication 1, **caractérisée en ce qu**'elle comporte des moyens d'étanchéité (409) entre le tube rectiligne (401) et le tube anti retour (425) qui sont constitués d'au moins un joint annulaire et/ou au moins un segment.

14. Vanne tubulaire de réglage du taux de compression d'un moteur à taux de compression variable suivant la revendication 1, **caractérisée en ce que** l'actionneur électrique (450) est constitué d'une bobine (451) de fil conducteur qui attire un noyau (452) ou une palette magnétique lorsque ladite bobine est traversée par un courant électrique.

15. Vanne tubulaire de réglage du taux de compression d'un moteur à taux de compression variable suivant la revendication 14, **caractérisée en ce que** le noyau (452) est directement fixé sur le tube rectiligne (401).

16. Vanne tubulaire de réglage du taux de compression d'un moteur à taux de compression variable suivant la revendication 1, **caractérisée en ce que** l'actionneur électrique (450) est constitué d'un moteur électrique rotatif qui peut faire tourner dans un sens ou dans l'autre une vis libre en rotation par rapport au carter de vanne (402) mais fixe en translation par rapport audit carter, ladite vis étant vissée directement ou indirectement dans le tube rectiligne (401) et ledit tube se déplaçant en translation par rapport audit carter lorsque ladite vis tourne sous l'action du moteur électrique rotatif.

17. Vanne tubulaire de réglage du taux de compression d'un moteur à taux de compression variable suivant la revendication 1, **caractérisée en ce que** le carter de vanne (402) est constitué d'au moins une pièce de révolution comportant des conduits d'entrée-sortie fixés sur une platine de distribution (433), ladite platine (433) étant elle-même fixée sur le carter cylindre (100) du moteur à taux de compression variable et ladite platine (433) servant de support à une ou plusieurs vannes tubulaires (400) et comportant des conduits (434, 435) mettant en relation lesdites vannes avec les chambres supérieures (121) et inférieures (122) du vérin de commande hydraulique à double effet (8) d'une part, et avec l'accumulateur de pression (251) d'autre part.

18. Vanne tubulaire de réglage du taux de compression d'un moteur à taux de compression variable suivant la revendication 17, **caractérisée en ce que** la platine de distribution (433) sert de carter de vanne (402) à au moins une vanne tubulaire (400).

19. Vanne tubulaire de réglage du taux de compression d'un moteur à taux de compression variable suivant la revendication 1, **caractérisée en ce que** l'actionneur électrique (450) est muni d'au moins une butée de vanne (455) réglable ou non limitant la course maximale de translation linéaire du tube rectiligne (401).

20. Vanne tubulaire de réglage du taux de compression d'un moteur à taux de compression variable suivant la revendication 1, **caractérisée en ce que** l'actionneur électrique (450) est muni de deux butées de vanne (455, 456) réglables ou non, la première butée (455) limitant la distance entre le tube rectiligne (401) et la surface d'obturation (412) à une valeur faible, et la deuxième butée (456) limitant la distance entre ledit tube (401) et ladite surface à une valeur maximale, la première butée (455) pouvant être dépassée au delà d'un certain effort produit par l'actionneur électrique (450), tandis que la deuxième butée (456) ne peut jamais être dépassée, quel que soit l'effort produit par ledit actionneur.

21. Vanne tubulaire de réglage du taux de compression d'un moteur à taux de compression variable suivant les revendications 1 et 20, **caractérisée en ce que** la deuxième butée (456) de l'actionneur électrique (450) est constituée d'un ressort pré chargé (459) qui repose sur une butée de rappel (458) lorsque l'actionneur électrique (450) ne produit pas un effort suffisant pour décoller ledit ressort (459) de ladite butée de rappel (458).

22. Vanne tubulaire de réglage du taux de compression d'un moteur à taux de compression variable suivant la revendication 14, **caractérisée en ce que** le noyau (452) est logé dans la chambre basse pression (403) tandis que la bobine (451) est logée à l'extérieur de ladite chambre (403), et le champ magnétique généré par ladite bobine (451) lorsqu'elle est traversée par un courant électrique passant au travers d'un manchon de bobine (454) solidaire du carter de vanne (402) de sorte à attirer ledit noyau (452).

23. Vanne tubulaire de réglage du taux de compression d'un moteur à taux de compression variable suivant la revendication 1, **caractérisée en ce que** la surface d'obturation (412) solidaire du carter de vanne (402) est aménagée sur la face interne d'un bouchon d'obturation (457) vissé dans ledit carter (402), ledit bouchon (457) comprenant au moins un orifice axial et/ou radial (460) positionné en périphérie externe de la zone de contact entre le tube rectiligne (401) et ladite surface d'obturation (412), et ledit orifice (460) reliant directement ou indirectement la chambre haute pression (405) avec l'une ou l'autre des chambres supérieure (121) ou inférieure (122) du vérin de commande (8).

24. Vanne tubulaire de réglage du taux de compression d'un moteur à taux de compression variable suivant la revendication 1, **caractérisée en ce que** le siège anti retour (428) est aménagé sur l'une des faces d'un porte siège anti retour (461) de forme sensiblement cylindrique logé dans le carter de vanne (402), ledit porte siège (461) étant muni d'au moins un conduit et/ou canal (462) permettant au fluide hydraulique d'aller de la chambre basse pression (403) vers la chambre haute pression (405) lorsque le tube anti-retour (425) n'est pas en contact avec le siège anti retour (428), et audit fluide hydraulique d'aller de la chambre haute pression (405) vers la chambre basse pression (403) lorsque le tube rectiligne (401) n'est pas en contact avec la surface d'obturation (412).

25. Vanne tubulaire de réglage du taux de compression d'un moteur à taux de compression variable suivant la revendication 23, **caractérisée en ce que** le bouchon d'obturation (457) vissé dans le carter de vanne (402) comprime le porte siège anti retour (461) et/ou le manchon de bobine (454), de sorte que ledit bouchon (457) constitue l'élément de fixation dudit porte siège (461) et dudit manchon de bobine (454) sur ledit carter de vanne (402).

26. Vanne tubulaire de réglage du taux de compression d'un moteur à taux de compression variable suivant la revendication 17, **caractérisée en ce que** la pièce de révolution comportant des conduits d'entrée-sortie est directement vissée sur ou dans le carter cylindre (100) du moteur à taux de compression variable.

27. Vanne tubulaire de réglage du taux de compression d'un moteur à taux de compression variable suivant la revendication 4, **caractérisée en ce que** la tête de traction (416) coopère avec une rotule de traction (440) de forme complémentaire à la surface (418), ladite rotule restant plaquée sur ladite surface par l'intermédiaire d'un ressort de rotulage (441) qui tend à éloigner le tube rectiligne (401) de l'actionneur électrique (450).

## Patentansprüche

1. Rohrförmiges Ventil zur Steuerung des Verdichtungsverhältnisses eines Motors mit variablem Verdichtungsverhältnis, umfassend ein Zylindergehäuse (100), das einen hydraulischen Steuerzylinder mit doppelter Wirkung (8) aufnimmt, eine obere Kammer (121) und eine untere Kammer (122) gefüllt mit einem hydraulischen Fluid und mindestens einen Zylinderkolben (13) verbunden mit einer Steuerzahnstange (7) aufweisend, wobei das rohrförmige Ventil zur Steuerung des Verdichtungsverhältnisses mindestens ein geradliniges Rohr (401) umfasst, das geradlinig in ein Ventilgehäuse (402) mit einer Niedrigdruckkammer (403) verbunden mit einem Druckspeicher (251) durch mindestens eine Leitung (404) und einer Hochdruckkammer (405) verbunden mit der einen oder anderen der oberen (121) oder unteren (122) Kammer des Steuerzylinders (8) durch mindestens eine Leitung (406) verschiebbar ist, wobei das geradlinige Rohr (401) ein erstes Ende (407), das in die Niedrigdruckkammer (403) mündet und ein zweites Ende (407), das in die Hochdruckkammer (405) mündet, aufweist, wobei das zweite Ende (408) in Kontakt mit mindestens einer Schließfläche (412) treten kann, die mit dem Ventilgehäuse (402) fest verbunden ist, sodass das zweite Ende so dicht wie möglich verschlossen wird, wobei das geradlinige Rohr (401) mittels mindestens einer Rückschlagsicherungs- und Schließfeder (427) und mindestens eines elektrischen Stellglieds (450), das dem geradlinigen Rohr (401) eine Kraft antagonistisch zu derjenigen von der Rückschlagsicherungs- und Schließfeder (427) produzierten verleihen kann, in Kontakt mit der Schließfläche (412) gehalten wird, wobei die Kraft ausreichend ist, um das geradlinige Rohr (401) von der Schließfläche (412) abzuheben, wenn das Stellglied von elektrischem Strom durchlaufen wird, **dadurch gekennzeichnet, dass** das rohrförmige Ventil zur Steuerung Dichtungsmittel (409) zwischen der Außenfläche des geradlinigen Rohres (401) und dem Ventilgehäuse (402) umfasst, die die Hochdruckkammer (405) von der Niedrigdruckkammer (403) isolieren, wobei die Dichtungsmittel (409) aus einem Rohr mit Rückschlagsicherung (425) bestehen, in dessen Innerem sich das geradlinige Rohr (401) befindet, wobei sich das geradlinige Rohr (401) in Längsrichtung in dem Rohr mit Rückschlagsicherung (425) bewegen kann, während sich das Rohr mit Rückschlagsicherung (425) in Längsrichtung in Bezug auf das Ventilgehäuse (402) bewegen kann, wobei das geradlinige Rohr (401) mit dem Rohr mit Rückschlagsicherung (425) eine Dichtung bildet, wobei das Rohr mit Rückschlagsicherung (425) ein Ende (426) aufweist, das am weitesten von der Schließfläche (412) des geradlinigen Rohres (401) entfernt ist, das mittels der Rückschlagsicherungs- und Schließfeder (427) in Kontakt mit einem Sitz mit Rückschlagsicherung (428) gehalten wird, der im Ventilgehäuse (402) vorgesehen ist, sodass der Durchlauf des hydraulischen Fluids von der Hochdruckkammer (405) in Richtung der Niedrigdruckkammer (403) untersagt wird, aber der Durchlauf des Fluids von der Niedrigdruckkammer (403) in Richtung der Hochdruckkammer (405) erlaubt wird.

2. Rohrförmiges Ventil zur Steuerung des Verdichtungsverhältnisses eines Motors mit variablem Verdichtungsverhältnis nach Anspruch 1, **dadurch gekennzeichnet, dass** das zweite Ende (408) des geradlinigen Rohres (401) kalottenförmig ist und eine Berührungslinie mit der Schließfläche (412) ähnlich derjenigen, die durch eine von einem Sitz getragenen Kugel realisiert wird, aufweist.

3. Rohrförmiges Ventil zur Steuerung des Verdichtungsverhältnisses eines Motors mit variablem Verdichtungsverhältnis nach Anspruch 1, **dadurch gekennzeichnet, dass** das geradlinige Rohr (401) durch eine Zugstange (414) mit dem elektrischen Stellglied (450) verbunden ist, wobei die Befestigung auf dem Rohr das Rohr nicht vollständig verschließt und einen axialen und/oder radialen Durchlass freilässt, der dem hydraulischen Fluid ermöglicht, im Inneren des Rohres zu zirkulieren.

4. Rohrförmiges Ventil zur Steuerung des Verdichtungsverhältnisses eines Motors mit variablem Verdichtungsverhältnis nach Anspruch 3, **dadurch gekennzeichnet, dass** das Ende der Zugstange (414) in einem Zugkopf (416) mit einem Durchmesser größer als ein Loch (417) in einer Fläche (418) endet, die das erste Ende (407) des geradlinigen Rohres (401) verschließt, wobei die Stange (414) das Loch (417) und den Kopf (416), der sich in dem Rohr (401) befindet, durchquert, wobei Letzteres mindestens eine radiale und/oder axiale Öffnung (419) aufweist, die in die Niedrigdruckkammer (403) mündet.

5. Rohrförmiges Ventil zur Steuerung des Verdichtungsverhältnisses eines Motors mit variablem Verdichtungsverhältnis nach Anspruch 3, **dadurch gekennzeichnet, dass** das Ende der Zugstange (414) in einem flachen Gelenkkopf (420) mit einem Loch (421) hindurch endet, durch das eine Achse (422) läuft, wobei sich die zwei Enden der Achse (422) in den radial in dem geradlinigen Rohr (401) angeordneten Löchern (423, 424) befinden, neben dem ersten Ende (407) des Rohres.

6. Rohrförmiges Ventil zur Steuerung des Verdichtungsverhältnisses eines Motors mit variablem Verdichtungsverhältnis nach Anspruch 1, **dadurch gekennzeichnet, dass** sich das elektrische Stellglied (450) in der Niedrigdruckkammer (403) befindet.

7. Rohrförmiges Ventil zur Steuerung des Verdichtungsverhältnisses eines Motors mit variablem Verdichtungsverhältnis nach den Ansprüchen 1 und 3, **dadurch gekennzeichnet, dass** sich das elektrische Stellglied (450) auf der Außenseite des Ventilgehäuses (402) befindet, während die Zugstange (414), die es mit dem geradlinigen Rohr (401) verbindet, das Ventilgehäuse (402) durchläuft und dabei mit Letzterem eine Dichtung bildet.

8. Rohrförmiges Ventil zur Steuerung des Verdichtungsverhältnisses eines Motors mit variablem Verdichtungsverhältnis nach Anspruch 1, **dadurch gekennzeichnet, dass** der Abschnitt des geradlinigen Rohres (401) auf Höhe der Dichtung, die das Rohr mit dem Rohr mit Rückschlagsicherung (425) bildet, kleiner ist als der Abschnitt des geradlinigen Rohres (401) auf Höhe seines Kontakts mit der Schließfläche (412).

9. Rohrförmiges Ventil zur Steuerung des Verdichtungsverhältnisses eines Motors mit variablem Verdichtungsverhältnis nach Anspruch 1, **dadurch gekennzeichnet, dass** das Ende (426) des Rohres mit Rückschlagsicherung (425), das in Kontakt mit dem Sitz mit Rückschlagsicherung (428) gehalten wird, kalottenförmig ist und eine Berührungslinie mit dem Sitz mit Rückschlagsicherung (428) ähnlich derjenigen, die durch eine von einem Sitz getragenen Kugel realisiert wird, aufweist.

10. Rohrförmiges Ventil zur Steuerung des Verdichtungsverhältnisses eines Motors mit variablem Verdichtungsverhältnis nach Anspruch 1, **dadurch gekennzeichnet, dass** sich die Rückschlagsicherungs- und Schließfeder (427) auf eine Seite abstützt, auf dem geradlinigen Rohr (401) neben seinem zweiten Ende (408), und auf der anderen Seite auf dem Rohr mit Rückschlagsicherung (425) neben seinem Ende (426), das in Kontakt mit dem Sitz mit Rückschlagsicherung (428) gehalten wird.

11. Rohrförmiges Ventil zur Steuerung des Verdichtungsverhältnisses eines Motors mit variablem Verdichtungsverhältnis nach Anspruch 1, **dadurch gekennzeichnet, dass** ein Anschlag (432) auf dem Rohr mit Rückschlagsicherung (425) und/oder auf dem geradlinigen Rohr (401) vorgesehen ist, wobei der Anschlag einerseits den maximalen Abstand zwischen dem Rohr mit Rückschlagsicherung (425) und dem Sitz mit Rückschlagsicherung (428) begrenzt und andererseits im gleichen Umfang den maximalen Abstand zwischen dem geradlinigen Rohr (401) und der Schließfläche (412) begrenzt.

12. Rohrförmiges Ventil zur Steuerung des Verdichtungsverhältnisses eines Motors mit variablem Verdichtungsverhältnis nach Anspruch 3, **dadurch gekennzeichnet, dass** es Dichtungsmittel zwischen der Zugstange (414) und dem Ventilgehäuse (402) aufweist, die aus mindestens einer ringförmigen Dichtung und/oder mindestens einem Segment bestehen.

13. Rohrförmiges Ventil zur Steuerung des Verdichtungsverhältnisses eines Motors mit variablem Verdichtungsverhältnis nach Anspruch 1, **dadurch gekennzeichnet, dass** es Dichtungsmittel (409) zwischen dem geradlinigen Rohr (401) und dem Rohr mit Rückschlagsicherung (425) aufweist, die aus mindestens einer ringförmigen Dichtung und/oder mindestens einem Segment bestehen.

14. Rohrförmiges Ventil zur Steuerung des Verdichtungsverhältnisses eines Motors mit variablem Verdichtungsverhältnis nach Anspruch 1, **dadurch gekennzeichnet, dass** das elektrische Stellglied (450) aus einer Spule (451) als Leiter besteht, die eine(n) magnetische(n) Kern (452) oder Palette anzieht, wenn die Spule von elektrischem Strom durchlaufen wird.

15. Rohrförmiges Ventil zur Steuerung des Verdichtungsverhältnisses eines Motors mit variablem Verdichtungsverhältnis nach Anspruch 14, **dadurch gekennzeichnet, dass** der Kern (452) direkt auf dem geradlinigen Rohr (401) befestigt ist.

16. Rohrförmiges Ventil zur Steuerung des Verdichtungsverhältnisses eines, Motors mit variablem Verdichtungsverhältnis nach Anspruch 1, **dadurch gekennzeichnet, dass** das elektrische Stellglied (450) aus einem elektrischen Rotationsmotor besteht, der eine frei drehbare Schraube in Bezug auf das Ventilgehäuse (402), aber feststehend in Bezug auf das Gehäuse, in die eine oder andere Richtung drehen lassen kann, wobei die Schraube direkt oder indirekt in das geradlinige Rohr (401) geschraubt ist und sich das Rohr in Bezug auf das Gehäuse verschiebt, wenn sich die Schraube unter Antrieb des elektrischen Rotationsmotors dreht.

17. Rohrförmiges Ventil zur Steuerung des Verdichtungsverhältnisses eines Motors mit variablem Verdichtungsverhältnis nach Anspruch 1, **dadurch gekennzeichnet, dass** das Ventilgehäuse (402) aus mindestens einem Drehstück mit auf einer Verteilerplatte (433) befestigten Eintritts-Austritts-Leitungen besteht, wobei die Platte (433) selbst an dem Zylindergehäuse (100) des Motors mit variablem Verdichtungsverhältnis befestigt ist und die Platte (433) dazu dient, ein oder mehrere rohrförmige Ventile (400) zu stützen und Leitungen (434, 435) aufweist, die die Ventile einerseits mit den oberen (121) und unteren (122) Kammern des hydraulischen Steuerzylinders mit doppelter Wirkung (8) und andererseits mit dem Druckspeicher (251) verbinden.

18. Rohrförmiges Ventil zur Steuerung des Verdichtungsverhältnisses eines Motors mit variablem Verdichtungsverhältnis nach Anspruch 17, **dadurch gekennzeichnet, dass** die Verteilerplatte (433) mindestens einem rohrförmigen Ventil (400) als Ventilgehäuse (402) dient.

19. Rohrförmiges Ventil zur Steuerung des Verdichtungsverhältnisses eines Motors mit variablem Verdichtungsverhältnis nach Anspruch 1, **dadurch gekennzeichnet, dass** das elektrische Stellglied (450) mit mindestens einem Ventilanschlag (455) versehen ist, der regulierbar ist oder den maximalen Kurs der linearen Verschiebung des geradlinigen Rohres (401) nicht einschränkt.

20. Rohrförmiges Ventil zur Steuerung des Verdichtungsverhältnisses eines Motors mit variablem Verdichtungsverhältnis nach Anspruch 1, **dadurch gekennzeichnet, dass** das elektrische Stellglied (450) mit zwei Ventilanschlägen (455, 456) versehen ist, die regulierbar sind oder nicht, wobei der erste Anschlag (455) den Abstand zwischen dem geradlinigen Rohr (401) und der Schließfläche (412) bei einem niedrigen Wert begrenzt und der zweite Anschlag (456) den Abstand zwischen dem Rohr (401) und der Fläche bei einem maximalen Wert begrenzt, wobei der erste Anschlag (455) über eine bestimmte vom elektrischen Stellglied (450) produzierte Kraft überschritten werden kann, während der zweite Anschlag (456) nie überschritten werden kann, unabhängig von der vom Stellglied produzierten Kraft.

21. Rohrförmiges Ventil zur Steuerung des Verdichtungsverhältnisses eines Motors mit variablem Verdichtungsverhältnis nach den Ansprüchen 1 und 20, **dadurch gekennzeichnet, dass** der zweite Anschlag (456) des elektrischen Stellglieds (450) aus einer vorgeladenen Feder (459) besteht, die auf einem Rückstellanschlag (458) ruht, wenn das elektrische Stellglied (450) keine ausreichende Kraft produziert, um die Feder (459) von dem Rückstellanschlag (458) abzuheben.

22. Rohrförmiges Ventil zur Steuerung des Verdichtungsverhältnisses eines Motors mit variablem Verdichtungsverhältnis nach Anspruch 14, **dadurch gekennzeichnet, dass** sich der Kern (452) in der Niedrigdruckkammer (403) befindet, während sich die Spule (451) an der Außenseite der Kammer (403) befindet, und das Magnetfeld, das von der Spule (451) erzeugt wird, wenn sie von elektrischem Strom durchlaufen wird, durch einen fest mit dem Ventilgehäuse (402) verbundenen Spulenstutzen (454) verläuft, um den Kern (452) anzuziehen.

23. Rohrförmiges Ventil zur Steuerung des Verdichtungsverhältnisses eines Motors mit variablem Verdichtungsverhältnis nach Anspruch 1, **dadurch gekennzeichnet, dass** die fest mit dem Ventilgehäuse (402) verbundene Schließfläche (412) auf der Innenseite mit einem Verschlussstöpsel (457) versehen ist, der in das Gehäuse (402) geschraubt ist, wobei der Stöpsel (457) mindestens eine axiale und/oder radiale Öffnung (460) umfasst, die im Außenumfang des Kontaktbereichs zwischen dem geradlinigen Rohr (401) und der Schließfläche (412) positioniert ist, und wobei die Öffnung (460) direkt oder indirekt die Hochdruckkammer (405) mit der einen oder anderen der oberen (121) oder unteren (122) Kammer des Steuerzylinders (8) verbindet.

24. Rohrförmiges Ventil zur Steuerung des Verdichtungsverhältnisses eines Motors mit variablem Verdichtungsverhältnis nach Anspruch 1, **dadurch gekennzeichnet, dass** der Sitz mit Rückschlagsicherung (428) auf einer der Flächen mit einer Sitzstütze mit Rückschlagsicherung (461) angebracht ist, deren Form im Wesentlichen zylindrisch ist, die sich im Ventilgehäuse (402) befindet, wobei die Sitzstütze (461) mit mindestens einer Leitung und/oder einem Kanal (462) versehen ist, die/der dem hydraulischen Fluid ermöglicht, von der Niedrigdruckkammer (403) zur Hochdruckkammer (405) zu fließen, wenn das Rohr mit Rückschlagsicherung (425) nicht in Kontakt mit dem Sitz mit Rückschlagsicherung (428) ist und dem hydraulischen Fluid ermöglicht, von der Hochdruckkammer (405) zur Niedrigdruckkammer (403) zu fließen, wenn das geradlinige Rohr (401) nicht in Kontakt mit der Schließfläche (412) ist.

25. Rohrförmiges Ventil zur Steuerung des Verdichtungsverhältnisses eines Motors mit variablem Verdichtungsverhältnis nach Anspruch 23, **dadurch gekennzeichnet, dass** der in das Ventilgehäuse (402) geschraubte Verschlussstöpsel (457) die Sitzstütze mit Rückschlagsicherung (461) und/oder den Spulenstutzen (454) umfasst, sodass der Stöpsel (457) das Befestigungselement des Federkeils (461) und des Spulenstutzens (454) auf dem Ventilgehäuse (402) darstellt.

26. Rohrförmiges Ventil zur Steuerung des Verdichtungsverhältnisses eines Motors mit variablem Verdichtungsverhältnis nach Anspruch 17, **dadurch gekennzeichnet, dass** das Drehstück mit Eintritts-Austritts-Leitungen direkt auf oder in das Zylindergehäuse (100) des Motors mit variablem Verdichtungsverhältnis geschraubt ist.

27. Rohrförmiges Ventil zur Steuerung des Verdichtungsverhältnisses eines Motors mit variablem Verdichtungsverhältnis nach Anspruch 4, **dadurch gekennzeichnet, dass** der Zugkopf mit einem Zugkugelgelenk (440) kooperiert, dessen Form komplementär zur Fläche (418) ist, wobei das Kugelgelenk durch das Zwischenstück einer Kugelgelenksfeder (441), die dazu neigt, das geradlinige Rohr (401) des elektrischen Stellglieds (450) zu verlängern, auf der Fläche aufgesetzt bleibt.

## Claims

1. A tubular valve for adjustment of the compression ratio of an engine with a variable compression ratio including a cylinder casing (100) which receives a double-acting hydraulic control jack (8) which comprises an upper chamber (121) and a lower chamber (122) which are filled with a hydraulic fluid and at least one jack piston (13) connected to a control rack (7), said tubular valve for adjustment of the compression ratio including at least one straight tube (401) capable of longitudinal translational movement in a valve casing (402) comprising a low pressure chamber (403) put in connection with a pressure accumulator (251) by at least one duct (404) and a high pressure chamber (405) put in connection with one or the other of the upper (121) or lower (122) chambers of the control jack (8) by at least one duct (406), said straight tube (401) comprising a first end (407) leading to said low pressure chamber (403) and a second end (408) leading to said high pressure chamber (405), said second end (408) capable of coming in contact with at least one closing surface (412) rigidly connected to said valve casing (402) so as to plug said second end as sealingly as possible, said straight tube (401) being maintained in contact with the closing surface (412) by at least one non-return closing spring (427) and at least one electric actuator (450) capable of applying a force to the straight tube (401) opposing the force produced by the non-return closing spring (427), said force being sufficient to detach the straight tube (401) from the closing surface (412) when an electric current runs through said actuator, **characterized in that the** tubular valve for adjustment includes sealing means (409) between the outer surface of said straight tube (401) and the valve casing (402) isolating the high pressure chamber (405) from the low pressure chamber (403), said sealing means (409) consisting of a non-return tube (425) inside which the straight tube (401) is housed, the straight tube (401) being capable of longitudinal movement in the non-return tube (425), while said non-return tube (425) can move longitudinally with respect to the valve casing (402), said straight tube (401), along with said non-return tube (425), producing a sealing, said non-return tube (425) comprising an end (426) that is farthest from the closing surface (412) of the straight tube (401), which is maintained in contact by the non-return closing spring (427) with a non-return seat (428) arranged in the valve casing (402) so as to prohibit passage of the hydraulic fluid from the high pressure chamber (405) to the low pressure chamber (403) but to allow passage of said fluid from the low pressure chamber (403) to the high pressure chamber (405).

2. The tubular valve for adjustment of the compression ratio of an engine with a variable compression ratio according to Claim 1, **characterized in that the** second end (408) of the straight tube (401) is truncated spherical and has a line of contact with the closing surface (412) similar to that produced by a ball bearing on a seat.

3. The tubular valve for adjustment of the compression ratio of an engine with a variable compression ratio according to Claim 1, **characterized in that the** straight tube (401) is connected to the electric actuator (450) by a traction rod (414) the attachment of which on said tube does not completely close said tube and leaves an axial and/or radial passage allowing the hydraulic fluid to circulate inside said tube.

4. The tubular valve for adjustment of the compression ratio of an engine with a variable compression ratio according to Claim 3, **characterized in that the** end of the traction rod (414) ends with a traction head (416) the diameter of which is greater than a hole (417) made in a surface (418) which plugs the first end (407) of the straight tube (401), said rod (414) passing through said hole (417) and said head (416) being housed in said tube (401), the latter comprising at least one radial and/or axial opening (419) leading to the low pressure chamber (403).

5. The tubular valve for adjustment of the compression ratio of an engine with a variable compression ratio according to Claim 3, **characterized in that the** end of the traction rod (414) ends with a flat articulation head (420) perforated with a hole (421) through which a shaft (422) passes, the two ends of said shaft (422) being housed in holes (423, 424) made radially in the straight tube (401), in the vicinity of the first end (407) of said tube.

6. The tubular valve for adjustment of the compression ratio of an engine with a variable compression ratio according to Claim 1, **characterized in that the** electric actuator (450) is housed in the low pressure chamber (403).

7. The tubular valve for adjustment of the compression ratio of an engine with a variable compression ratio according to Claims 1 to 3, **characterized in that the** electric actuator (450) is housed outside of the valve casing (402), while the traction rod (414) that connects it to the straight tube (401) passes through the valve casing (402) while forming, along with the latter, a sealing.

8. The tubular valve for adjustment of the compression ratio of an engine with a variable compression ratio according to Claim 1, **characterized in that the** cross section of the straight tube (401) at the site of the sealing formed by said tube along with the non-return tube (425) is smaller than the cross section of said straight tube (401) at the site of the contact thereof with the closing surface (412).

9. The tubular valve for adjustment of the compression ratio of an engine with a variable compression ratio according to Claim 1, **characterized in that the** end (426) of the non-return tube (425) that is maintained in contact with the non-return seat (428) is truncated spherical and has a line of contact with said non-return seat (428) similar to that produced by a ball bearing on a seat.

10. The tubular valve for adjustment of the compression ratio of an engine with a variable compression ratio according to Claim 1, **characterized in that the** non-return closing spring (427) rests, on one side, on the straight tube (401) in the vicinity of the second end (408) thereof, and, on the other side, on the non-return tube (425) in the vicinity of the end (426) thereof that is maintained in contact with the non-return seat (428).

11. The tubular valve for adjustment of the compression ratio of an engine with a variable compression ratio according to Claim 1, **characterized in that** a stop (432) is arranged on the non-return tube (425) and/or on the straight tube (401), said stop liming the maximum distance between the non-return tube (425) and the non-return seat (428), on the one hand, and limiting in the same proportions the maximum distance between the straight tube (401) and the closing surface (412), on the other hand.

12. The tubular valve for adjustment of the compression ratio of an engine with a variable compression ratio according to Claim 3, **characterized in that** it comprises sealing means between the traction rod (414) and the valve casing (402), which consist of at least one annular seal and/or at least one segment.

13. The tubular valve for adjustment of the compression ratio of an engine with a variable compression ratio according to Claim 1, **characterized in that** it comprises sealing means (409) between the straight tube (401) and the non-return tube (425), which consist of at least one annular seal and/or at least one segment.

14. The tubular valve for adjustment of the compression ratio of an engine with a variable compression ratio according to Claim 1, **characterized in that the** electric actuator (450) consists of a coil (451) of conducting wire which attracts a core (452) or a magnetic blade when said coil is run through by an electric current.

15. The tubular valve for adjustment of the compression ratio of an engine with a variable compression ratio according to Claim 14, **characterized in that the** core (452) is attached directly on the straight tube (401).

16. The tubular valve for adjustment of the compression ratio of an engine with a variable compression ratio according to Claim 1, **characterized in that the** electric actuator (450) consists of a rotary electric motor which can bring about the turning in one direction or the other of a screw which is free to rotate with respect to the valve casing (402) but which is translationally fixed with respect to said casing, said screw being screwed directly or indirectly in the straight tube (401) and said tube moving translationally with respect to said casing when said screw turns under the action of the rotary electric motor.

17. The tubular valve for adjustment of the compression ratio of an engine with a variable compression ratio according to Claim 1, **characterized in that the** valve casing (402) consists of at least one rotationally symmetrical component comprising inlet-outlet ducts attached on a distribution plate (433), said plate (433) being itself attached on the cylinder casing (100) of the engine with variable compression ratio, and said plate (433) serving as support for one or more tubular valves (400) and having ducts (434, 435) putting said valves in connection with the upper (121) and lower (122) chambers of the double-acting hydraulic control jack (8), on the one hand, and with the pressure accumulator (251), on the other hand.

18. The tubular valve for adjustment of the compression ratio of an engine with a variable compression ratio according to Claim 17, **characterized in that the** distribution plate (433) acts as valve casing (402) for at least one tubular valve (400).

19. The tubular valve for adjustment of the compression ratio of an engine with a variable compression ratio according to Claim 1, **characterized in that the** electric actuator (450) is provided with at least one adjustable or non-adjustable valve stop (455) limiting the maximum linear translation stroke of the straight tube (401).

20. The tubular valve for adjustment of the compression ratio of an engine with a variable compression ratio according to Claim 1, **characterized in that the** electric actuator (450) is provided with two adjustable or non-adjustable valve stops (455, 456), the first stop (455) limiting the distance between the straight tube (401) and the closing surface (412) to a low value, and the second stop (456) limiting the distance between said tube (401) and said surface to a maximum value, with it being possible for the first stop (455) to be passed, beyond a certain force produced by the electric actuator (450), while the second stop (456) can never be passed, regardless of the force produced by said actuator.

21. The tubular valve for adjustment of the compression ratio of an engine with a variable compression ratio according to Claims 1 and 20, **characterized in that the** second stop (456) of the electric actuator (450) consists of pre-loaded spring (459) which rests on a return stop (458) when the electric actuator (450) is not producing sufficient force to detach said spring (459) from said return stop (458).

22. The tubular valve for adjustment of the compression ratio of an engine with a variable compression ratio according to Claim 14, **characterized in that the** core (452) is housed in the low pressure chamber (403), while the coil (451) is housed outside of said chamber (403), and the magnetic field generated by said coil (451), when an electric current runs through it, passes through a coil sleeve (454) rigidly connected to the valve casing (402) so as to attract said core (452).

23. The tubular valve for adjustment of the compression ratio of an engine with a variable compression ratio according to Claim 1, **characterized in that the** closing surface (412) rigidly connected to the valve casing (402) is arranged on the inner surface of a closing plug (457) screwed into said casing (402), said plug (457) including at least one axial and/or radial opening (460) positioned on the outer periphery of the zone of contact between the straight tube (401) and said closing surface (412), and said opening (460) directly or indirectly connecting the high pressure chamber (405) to one or the other of the upper (121) or lower (122) chambers of the control jack (8).

24. The tubular valve for adjustment of the compression ratio of an engine with a variable compression ratio according to Claim 1, **characterized in that the** non-return seat (428) is arranged on one of the surfaces of a substantially cylindrical non-return seat holder (461) housed in the valve casing (402), said seat holder (461) being provided with at least one duct and/or channel (462) allowing the hydraulic fluid to go from the low pressure chamber (403) to the high pressure chamber (405) when the non-return tube (425) is not in contact with the non-return seat (428), and allowing said hydraulic fluid to go from the high pressure chamber (405) to the low pressure chamber (403) when the straight tube (401) is not in contact with the closing surface (412).

25. The tubular valve for adjustment of the compression ratio of an engine with a variable compression ratio according to Claim 23, **characterized in that the** closing plug (457) screwed in the valve casing (402) compresses the non-return seat holder (461) and/or the coil sleeve (454), so that said plug (457) forms the element of attachment of said seat holder (461) and of said coil sleeve (454) on said valve casing (402).

26. The tubular valve for adjustment of the compression ratio of an engine with a variable compression ratio according to Claim 17, **characterized in that the** rotationally symmetrical component comprising inlet-outlet ducts is screwed directly on or in the cylinder casing (100) of the engine with variable compression ratio.

27. The tubular valve for adjustment of the compression ratio of an engine with a variable compression ratio according to Claim 4, **characterized in that the** traction head (416) cooperates with a traction swivel (440) the shape of which is complementary to the surface (418), said swivel remaining pressed on said surface by means of a swivel spring (441) which tends to distance the straight tube (401) from the electric actuator (450).
